# EUROPEAN PATENT APPLICATION

(11) **EP 4 814 734 A1**
(43) Date of publication of application: **30.09.2026**
(21) Application number: 25226177.1
(22) Date of filing: 22.12.2025
(51) Int. Cl.: G06F 15/173

(54) **ENCRYPTION COMPUTE APPARATUS AND METHOD WITH COMPUTE GRID PARTITIONING AND RECONFIGURATION**

(30) Priority: 28.03.2025 US 202519094671
(71) Applicant: INTEL Corporation, Santa Clara, CA 95054 (US)
(72) Inventor: Wilkerson, Christopher, Vancouver, 98662 (US); Taneja, Sachin, Hillsboro, 97124 (US); Vartak, Adish, Palo Alto, 94304 (US); Kumar, Raghavan, Hillsboro, 97124 (US); Mathew, Sanu, Portland, 97229 (US)
(74) Representative: Goddar, Heinz J.

(57) **Abstract**

A Fully-Homomorphic Encryption Compute Engine is described with Programmable TilelDs. An example apparatus comprises: a plurality of compute tiles coupled to an interconnect network; a compute tile control circuit coupled to the plurality of compute tiles over the interconnect network, the compute tile control circuit to dispatch an instruction for execution by the plurality of compute tiles; the plurality of compute tiles to execute a corresponding plurality of instances of the instruction to associate the plurality of compute tiles with a corresponding plurality of tile identifiers (IDs), each compute tile to be associated with one of the tile IDs; and the compute tile control circuitry to schedule an operation to be executed collectively by a group of the compute tiles, the group of compute tiles to be indicated, at least in part, based on the tile IDs.

## Description

### BACKGROUND

Emerging accelerator architectures such as fully homomorphic encryption (FHE) and artificial intelligence (AI) strain the limits of modern silicon. Designers must maximize the number of math units to provide sufficient compute throughput while enabling the flow of operands and other program data into compute resources. Program operands and other data must flow from dynamic random access memory (DRAM) such as high bandwidth memory (HBM) to large cache-like scratch pad buffers (SPAD) and from there into compute elements before they are required for execution. The movement of this data must be not only be timely but, given severe bandwidth constraints, must avoid generating requests for unused data.

### BRIEF DESCRIPTION OF DRAWINGS

Various examples in accordance with the present disclosure will be described with reference to the drawings, in which:
FIG. 1 illustrates examples of conventional encryption.
FIG. 2 illustrates examples of homomorphic encryption.
FIG. 3 illustrates examples acts for fully homomorphic encryption (FHE) using ring learning with errors.
FIG. 4 illustrates examples of an FHE accelerator.
FIG. 5 illustrates examples of public key generation.
FIG. 6 illustrates examples of an FHE compute engine.
FIG. 7 illustrates examples of a FHE compute engine tile.
FIG. 8 illustrates examples of register file bank to butterfly unit interconnection.
FIG. 9(A) illustrates examples of an 8x8 compute tile array.
FIG. 9(B) illustrates examples of a 6x7 compute tile array.
FIGS. 10(A)-(B) illustrate examples of a reconfigurable decimation-in-time (DIT)/ decimation-in-frequency (DIF) butterfly circuit.
FIGS. 11(A)-(D) illustrate examples of the butterfly circuit configured to perform a specific operation.
FIG. 12 illustrates examples of a butterfly datapath with carry save adder (CSA) and Montgomery reduction.
FIG. 13 illustrates examples of hardware support for multiple, distinct threads that use different resources.
FIG. 14 illustrates examples of an instruction format used by the instructions of the threads.
FIG. 15 illustrates examples of a format for a Cfetch ISA (or extension) instruction.
FIG. 16 illustrates examples of Cfetch ISA (or extension) instructions and their descriptions.
FIG. 17 illustrates examples of encodings of Cfetch ISA (or extension) instructions.
FIG. 18 illustrates examples of a format for a Mfetch ISA (or extension) instruction.
FIG. 19 illustrates examples of Mfetch ISA (or extension) instructions and their descriptions.
FIG. 20 illustrates examples of encodings of Mfetch ISA (or extension) instructions.
FIG. 21 illustrates examples of a current program for an FHE accelerator.
FIG. 22 illustrates examples of the program of FIG. 21 but optimized for SID.
FIG. 23 illustrates examples of a method for SID usage.
FIG. 24 illustrates examples of one or more supported memory instructions and their operands.
FIGS. 25-34 illustrate examples of polynomial instructions.
FIG. 35 illustrates examples of instruction queue usage.
FIG. 36 illustrates examples of Xinst dispatch.
FIG. 37 illustrates examples of a FHE program having multiple epochs.
FIG. 38 illustrates examples of a CE block.
FIGS. 39(A)-(C) illustrate examples of pre-routes usage.
FIGS. 40(A)-(C) illustrate examples of pre-planned data movement for a transpose operation as executed in response to a shuffle instruction.
FIGS. 41(A)-(F) illustrate examples of how the data moves across a mesh.
FIG. 42 illustrates examples of a shuffle instruction. In particular fields for a plurality of operands are illustrated.
FIG. 43 illustrates an example computing system.
FIG. 44 illustrates a block diagram of an example processor and/or System on a Chip (SoC) that may have one or more cores and an integrated memory controller.
FIG. 45 is a block diagram illustrating a computing system 4500 configured to implement one or more aspects of the examples described herein.
FIG. 46 shows a parallel compute system 4600, according to some examples.
FIGS. 47A-47B illustrate a hybrid logical/physical view of a disaggregated parallel processor, according to examples described herein.
FIG. 48 is a block diagram illustrating the use of a software instruction converter to convert binary instructions in a source ISA to binary instructions in a target ISA according to examples.
FIG. 49 is a block diagram illustrating an IP core development system 4900 that may be used to manufacture an integrated circuit to perform operations according to some examples.
FIG. 50 illustrates an example compute engine comprising a control block and a plurality of compute tiles.
FIG. 51 illustrates an embodiment in which each compute tile includes a tile ID register to store an associated tile ID.
FIG. 52 illustrates loading of tile IDs to tile ID registers of compute tiles in accordance with some embodiments.
FIGS. 53A-B illustrate different examples of compute tile partitioning using tile IDs in accordance with some embodiments.
FIG. 54 illustrates a method in accordance with some embodiments of the invention.

### DETAILED DESCRIPTION

The present disclosure relates to methods, apparatus, systems, and non-transitory computer-readable storage media for fully homomorphic encryption.

In previous architectures prefetching has been utilized to address bandwidth issues. Prefetching data and/or instructions can address memory latency issues, but often wastes memory bandwidth. Prefetch instructions must be inserted much earlier in a program and as a result are difficult to time relative to their subsequent use. Inserting prefetches too late in a program flow will cause the execution of the program to stall while waiting for data, but inserting prefetches too early may cause the removal of other critical data from the scratchpad or cache. DRAM latency, which is intrinsically variable, makes the timing of DRAM requests particularly difficult since the compiler has no a priori knowledge of the request latency.

Another approach for workloads such as Fully Homomorphic Encryption (FHE), Artificial Intelligence (AI), etc. is to use threading. Threading including helper threads and multi-threaded workload implementations provide more dynamic scheduling flexibility to respond to variable latencies but are general solutions that come with significant overhead including significant synchronization overhead and contention for shared resources.

Examples detailed herein describe the use of static instruction decomposition (SID). SID takes a monolithic program consisting of both data movement and compute instructions and separates the program into multiple threads with each thread responsible for a particular data movement or compute task. Such separation may be performed, e.g., by a compiler. Each of these threads, data movement and compute, require different pipeline resources and as a result will be able to proceed simultaneously if dependencies between the threads can be decoupled. In some examples, low overhead synchronization primitives are described to enable this decoupling between these threads. SID provides the benefits of advanced compilers and dynamic execution (out of order) in a mechanism with very low hardware complexity/power. This will provide substantial performance benefits especially in FHE workloads.

Prior to describing SID, this description will discuss FHE in general and some FHE approaches in particular. This description is not meant to be limiting (that is the principles of SID can be applied to AI, etc.), but will provide examples of different types of memory, etc. where data and/or instructions can be independently moved and/or executed.

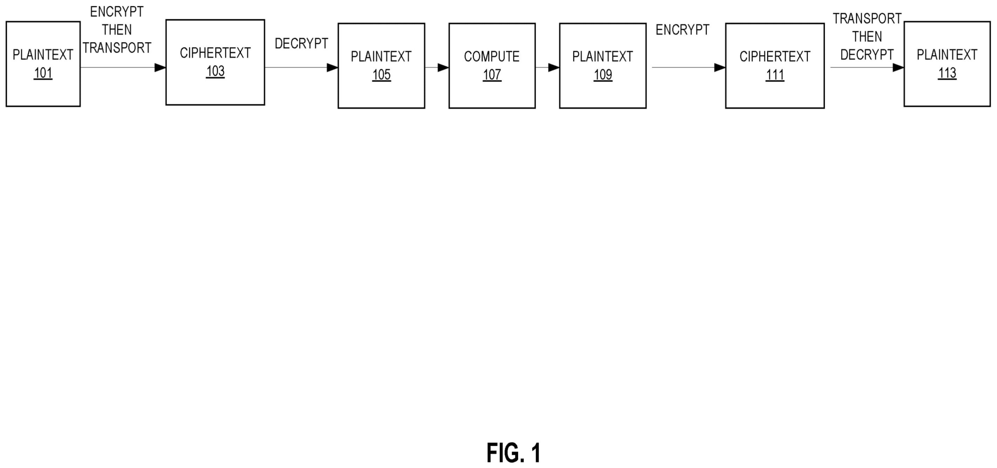

FIG. 1 illustrates examples of conventional encryption. As shown, plaintext 101 (e.g., "126") is encrypted and then transported as ciphertext 103 (e.g., "E7L"). To perform a computation on the encrypted text, it first has to be decrypted back to plaintext 105. A computation 107 (such as multiply by 2) is performed on that plaintext 105 and the result is in plaintext 109 (e.g., "252"). This result is encrypted into ciphertext 111 to be transported and finally decrypted into plaintext 113. Unfortunately, during the computation portion the data is in plaintext (105 and 109) and is vulnerable.

Quantum computing may break this conventional encryption scheme. Improved schemes are being developed to replace the conventional scheme and allow for FHE where the data is encrypted even during a compute operation. Some improved encryption schemes use lattice-based cryptography. A benefit of lattice-based cryptography is that lattice problem hardness enables cryptographic schemes to be resistant to quantum attacks. Additionally, lattice-based cryptosystem algorithms are relatively simple and able to be run in parallel due to their dependency on operations on rings of integers for certain cryptosystems.

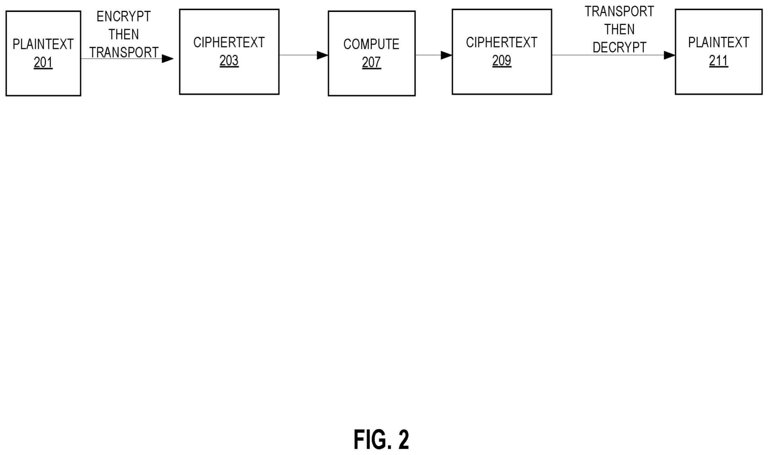

FHE may be paired with lattice based cryptographic systems. FHE enables arbitrary calculations on encrypted data while maintaining correct intermediate results without decrypting the data to plaintext. FIG. 2 illustrates examples of homomorphic encryption. FHE solves the problem of protecting data at all times including against an honest-but-curious attacker. FHE allows for the protection of input data, intermediate data, and output data. Hence, data is not vulnerable when it is used. As shown, plaintext 201 (e.g., "126") is encrypted and then transported as ciphertext 203 (e.g., "E7L"). Unlike the conventional encryption scheme, the ciphertext 203 does not need to be decrypted to be operated on. Rather, a compute function 207 is applied to the ciphertext 203 directly and the result of the compute function 207 is ciphertext 209. This ciphertext 209 can be transported and decrypted into plaintext 211.

A bottleneck in FHE and/or lattice-based cryptography is efficient modular polynomial multiplication. Lattice-based cryptography algorithms rely on a significant amount polynomial multiplications to encode and decode polynomial plaintext/ciphertext using key values. These keys then rely on a large number of Gaussian samples because they are required to be random polynomials.

In some examples, detailed herein a Residue Number System-based (RNS) Number Theoretic Transform (NTT) polynomial multiplier for application in lattice-based cryptography, FHE, etc. In some examples, the data comes into the system in a double CRT format described in detail below.

A lattice $L ⊂ {ℝ}^{n}$ is the set of all integer linear combination of basis vectors ${b}_{1} , … {b}_{n} ∈ {ℝ}^{n}$ such that $L = \left\{\sum {a}_{i} {b}_{i} : {a}_{i} ∈ ℤ\right\}$. *L* is a subgroup of ${ℝ}^{n}$ that is isomorphic to ${ℤ}^{n}$*.* Cryptography based on lattices exploits the hardness of two problems: Short Integer Solution (SIS) and Learning With Errors (LWE). LWE requires large keys which may be impractical in current architectures. A derivation of LWE called Ring-LWE (RLWE or ring-LWE) is used in some examples detailed herein.

Cryptosystems based on the LWE problem, the most used one, have their foundation in the difficulty of finding the secret key *sk* given (*A, pk*)*,* where *pk = A * sk + e mod q* with *pk* being a public key, *e* an error vector with Gaussian distribution, and *A* a matrix of constants in ${ℤ}_{w}^{r x n}$ chosen randomly from a uniform distribution. LWE requires large keys that in general are impractical for current designs. In RWLE A is implicitly defined as a vector *a* in a ring $R ≡ {ℤ}_{q} \left[x\right] / \left({x}^{n}+1\right)$. For a ciphertext modulus *q*, the ciphertext space is defined as 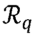 = 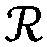 /*q* 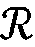 *.* The plaintext space is 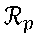 meaning plaintexts are represented as length *n* vectors of integers modulus *p*.

The RLWE distribution on 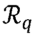 x 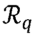 consists of pairs (*a, t*) with *a* ∈ 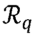 chosen uniformly random and *t = a* x *s + e* ∈ 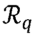 where *s* is a secret element and *e* is sampled from a discrete Gaussian distribution 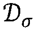 with a standard deviation σ.

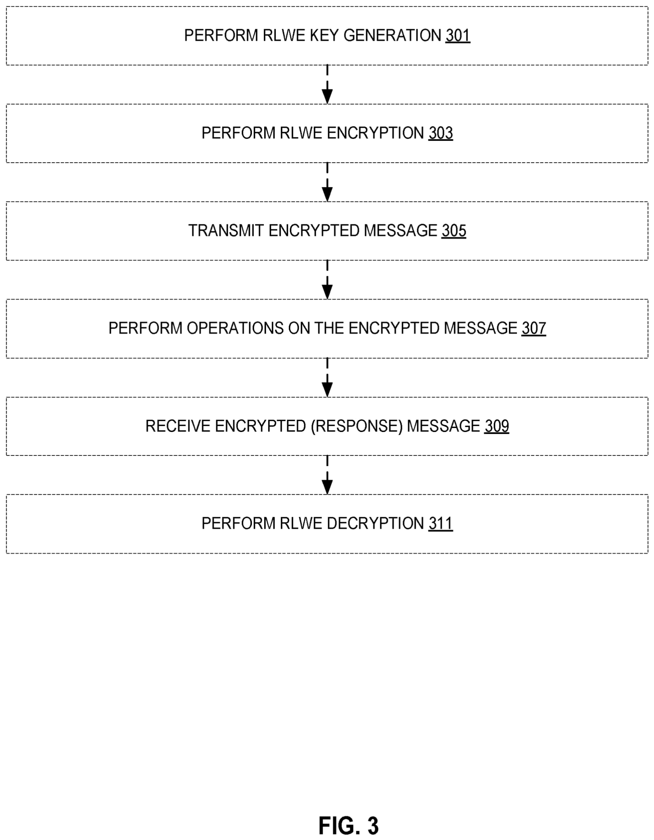

Generically, RWLE utilizes three acts - key generation, encryption, and decryption. FIG. 3 illustrates example acts for FHE using RWLE. In some examples, at 301, RWLE key generation is performed. Key generation generates a private key and a public key. In some examples, a polynomial *a* is chosen uniformly and two polynomials *r*₁ and *r*₂ are sampled from the Gaussian distribution 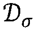 *.* Polynomial *r*₂ is the private key and the two polynomials participate in the public key generation process *p* ← *r*₁ *- a* x *r*₂.

In some examples, at 303, RWLE encryption is performed. Encryption encrypts an input message m to cipher text (*c*₁*, c*₂)*.* In some examples, the input message is encoded into a polynomial *mₑ* using an encoder. In some examples, the cipher text (*c*₁*, c*₂) is calculated based on the public key, the encoded message, and sampled error polynomials (e.g., (*e*₁, *e*₂, and *e*₃). ${c}_{1} ← a \times {e}_{1} + {e}_{2}$ ${c}_{2} ← p \times {e}_{1} + {e}_{3} + {m}_{e}$

In some examples, at 305, an encrypted message is transmitted to a recipient. In some examples, one or more operations are performed on the encrypted message such as performing a mathematical operation on the message at 307. Note that the performance could be done by the sender before transmission, by an intermediate third party (not the final recipient), or by the recipient itself.

In some examples, at 309, the encrypted message or a response thereto is received. The received message or response message is decrypted, in some examples, at 311. Decryption recovers an original message m from the cipher text (*c*₁, *c*₂). In some examples, decryption starts with the calculation of a pre-decoded polynomial *m_{d}* ${m}_{d} ← {c}_{1} \times {r}_{2} + {c}_{2}$ The original message is recovered from the pre-decoded polynomial *m_{d}* using a decoder. In some examples, relinearization is required during decryption.

One or more of the above acts utilizes instructions for performing the multiplication, addition, etc. using an FHE accelerator.

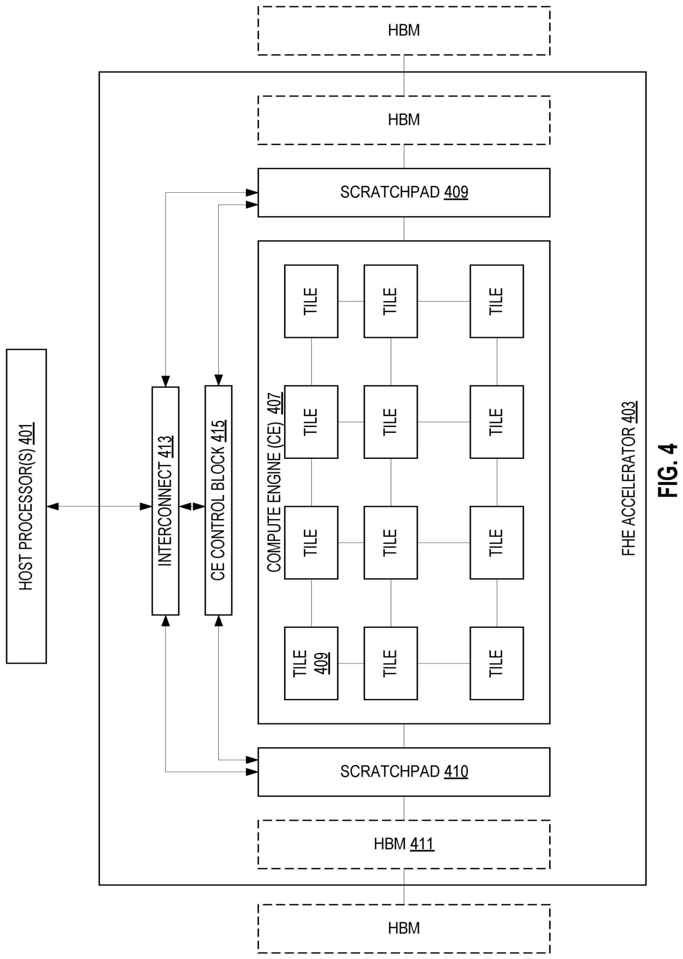

FIG. 4 illustrates examples of an FHE accelerator. As shown, the FHE accelerator 403 couples to one or more host processors 401 such as one or more central processing unit (CPU) cores via one or more interconnects 413.

The one or more interconnects 413 coupled to scratchpad memory 410 which handles load/stores of data and provides data for execution by the compute engine (CE) 407 comprising a plurality of CE blocks 409. In some examples, the CE blocks 409 are coupled to memory, the interconnect 413, and/or a CE control block 415. In some examples, the CE 407 can be viewed as a network-on-chip (NOC).

The scratchpad memory 410 is coupled to HBM 411 which stores a larger amount of data. In some examples, the data is distributed across HBM 411 and banks of SPAD 410. In some examples, HBM is external to the FHE accelerator 403. In some examples, some HBM is external to the FHE accelerator 403 and some HBM is internal to the FHE accelerator 403.

In some examples, a CE control block (CCB) 415 dispatches instructions and handles synchronization of data from the HBM 411 and scratchpad memory 410 for the CE 407. In some examples, memory loads and stores are tracked in the CCB 415 and dispatched across SPAD 410 for coordinated data fetch. These loads and stares are handled locally in the SPAD 410 and written into the SPAD 410 and/or HBM 411. In some examples, the CCB 415 includes an instruction decoder to decode the instructions detailed herein. In some examples, a decoder of a host processor 401 decodes the instructions to be executed by the CE 407.

In some examples, the basic organization of the FHE compute engine (CE) 407 is a wide and flexible array of functional units organized in a butterfly configuration. The array of butterfly units is tightly coupled with a register file capable of storing one or more of an HE operands (e.g., entire input and output ciphertexts), twiddle factor constants, relevant public key material, etc. In some examples, the HE operands, twiddle factors, key information, etc. are stored as polynomial coefficients.

The CE 407 performs polynomial multiplication, addition, modulo reduction, etc. Given *aᵢ* and *bᵢ* in 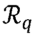 , two polynomials *a*(*x*) and *b*(*x*) over the ring can be expressed as $a \left(x\right) = {a}_{0} + {a}_{1} x + {a}_{2} {x}^{2} + ⋯ {a}_{n - 1} {x}^{n - 1}$ $b \left(x\right) = {b}_{0} + {b}_{1} x + {b}_{2} {x}^{2} + ⋯ {b}_{n - 1} {x}^{n - 1}$

In some examples, an initial configuration of the array with respect to the register file allows full reuse of the register file while processing Ring-LWE polynomials with degree up to N = 16,384 and log *q* = 512-bit long coefficients; and partial reuse beyond such parameters, for which processing ciphertexts will require data movement from and to the upper levels in the memory hierarchy.

In some examples, the compute engine is composed of 512-bit Large Arithmetic Word Size (LAWS) units organized as vectored butterfly datapaths. The butterfly units (LAWS or not) are designed to natively support operations on operands in either their positional form or leveraging Chinese Remainder Theorem (CRT) representation. In some examples, a double-CRT representation is used. The first CRT layer uses the Residue Number System (RNS) to decompose a polynomial into a tuple of polynomials with smaller moduli. The second layer converts each of small polynomials into a vector of modulo integers via NTT. In the double-CRT representation, an arbitrary polynomial is identified with a matrix consisting of small integers, and this enables an efficient polynomial arithmetic by performing component-wise modulo operations. The RNS decomposition offers the dual promise of increased performance using SIMD operations along with a quadratic reduction in area with decreasing operand widths.

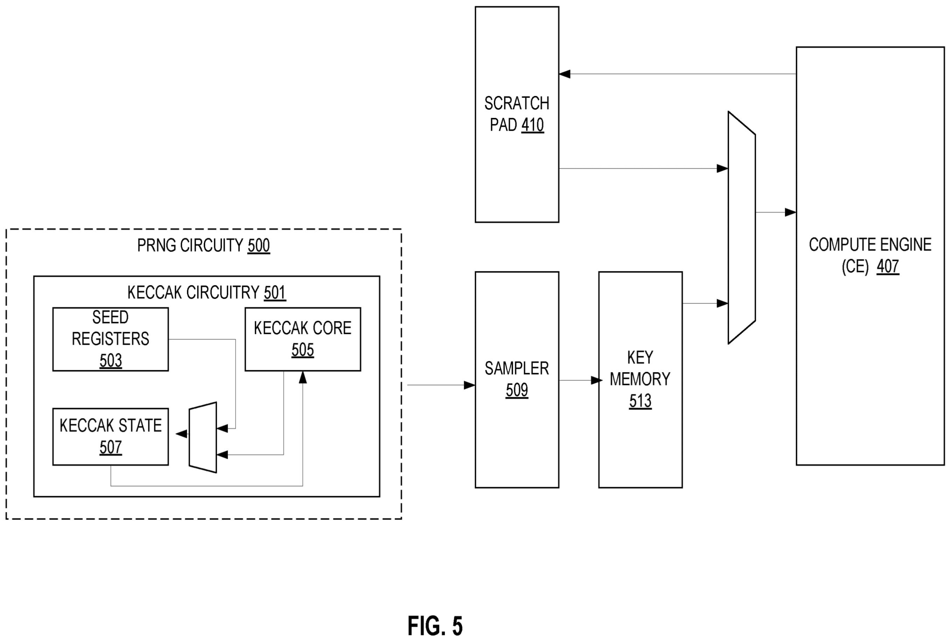

FIG. 5 illustrates examples of public key generation. Pseudo-random number generator (PRNG) circuitry 500 generates a pseudo-random number. In some examples, the PRNG circuitry 500 utilizes KECCAK circuitry 501 which uses a Keccak-f[] permutation (e.g., f[1600]) performed by Keccak core 505 to generate a value from seed values stored in seed register(s) 503 and Keccak state information 507. The Keccak core 505 can be configured in different SHA-3 modes. PRNG values output X bits (e.g., 32 bits) at a time as required by sampler 509 (e.g., one or more of a uniform sampler, a binomial sampler, a Gaussian sampler, a trinary sampler, and/or a rejection sampler). The sampler may AND the input bits with a mask. The sampled value(s) (mod q) are stored in key memory 513. The key memory 513 and scratchpad 410 are muxed to provide input for the CE 407.

For encryption, a public key A is sampled randomly from ${ℤ}_{q} \left[x\right] / \left({x}^{n}+1\right)$. The ciphertext is [*C*₀*, C*₁] = [*A * s + p * e* + *m*, *-A*]*.* Decryption is performed by computing *C*₀ + *C*₁ ** s* and reduced to *modulo p*. Note that half of the ciphertext is a random sample in ${ℤ}_{q}$*.*

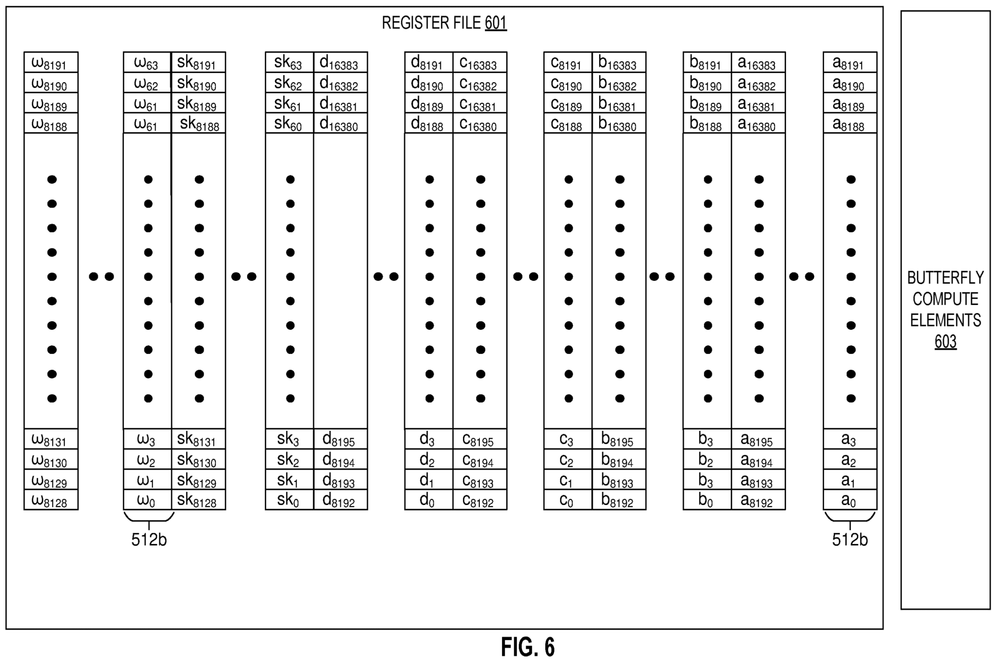

FIG. 6 illustrates examples of an FHE compute engine. In some examples, this illustrates CE 407. The CE 407 includes a plurality of butterfly compute elements 603 and a register file 601. For example, the butterfly compute elements 603 may be in one or more arrays of butterfly elements (e.g., 8,192 elements) each implementing a DIT circuit (e.g., a 32-bit DIT circuit) that is to be used to execute vector polynomial add/multiply/multiply accumulate (MAC) operations on a polynomial ring using residue coefficient (e.g., a 32-bit reside coefficient). Note that butterfly compute elements of different sizes (e.g., 512-bit) may be used.

The polynomial is stored in the local register file (RF) 601. The RF 601 is capable, in some examples, of single cycle read/write latency to the butterfly compute elements 603 to enable high throughput operations for polynomial instructions. In some examples, a separate read/write port is also provisioned to enable communications with higher levels of the memory hierarchy such as the SPAD 410 and/or HBM 411. The RF 601 serves as the local storage polynomials including operands (a, b, c, and d), keys (e.g., sk or pk), relinearization keys, NTT twiddle-factor constants (ω), etc.

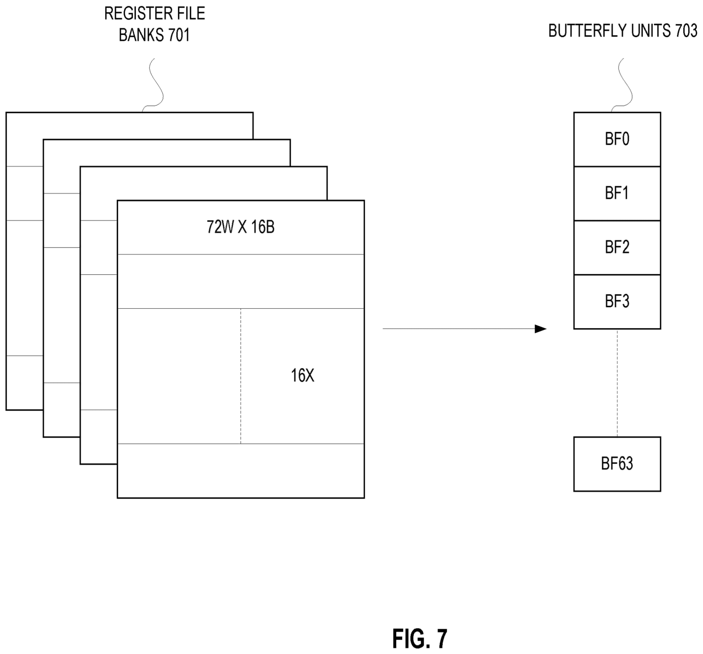

To efficiently move data between the RF 601 and the butterfly compute elements 603, in some examples, a tiled CE architecture is used where an array of smaller RFs are coupled with a proper subset of BF elements. FIG. 7 illustrates examples of a FHE compute engine tile. In some examples, this is an illustration of tile 409.

As illustrated, where each compute tile is composed of a subset of the register file (shown as a plurality of register file banks 701) are coupled with butterfly compute elements 703 (e.g. 64 such elements in this illustration allow different numbers of register file banks and compute elements may be used in some examples). In some examples, each butterfly unit consumes up to 3 input operands and produces 2 output operands each cycle.

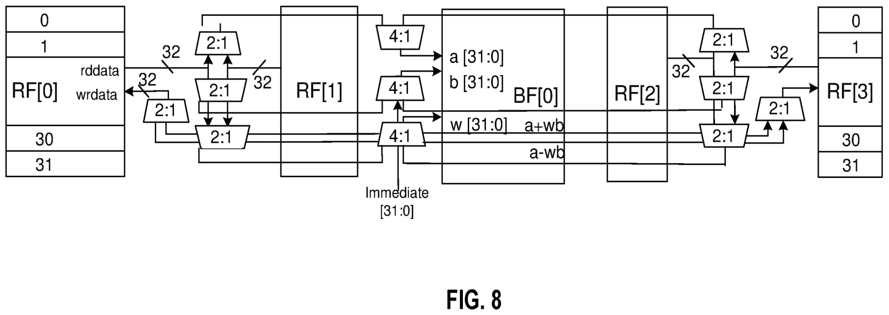

In some examples, the RF subset is organized into 4 banks of 18KB each with each memory bank comprising 16 physical memory modules of 72 words depth with 128-bit 1-read/1-write ports. The 1-read/1-write ported RF banks 701 feed each butterfly unit with 'a', 'b,' 'c,; and/or 'ω' inputs. With the two butterfly outputs (a+ω*b and a-ω*b) written to any of the four RF banks simultaneously for NTT or INTT. FIG. 8 illustrates examples of register file bank to butterfly unit interconnection showing inputs of 32-bit values of a, b, and ω from RF[1] and writes of a+ω*b and a-ω*b to RF[0] and RF[3]. In some examples, SPAD 410 can read/write to any of the RF banks that are not servicing a butterfly.

For ciphertexts represented in the double-Chinese Remainder Transform (CRT) format, multiplication, addition, and/or multiply-accumulate operations are performed coefficient-wise and do not require interaction between coefficients. NTT/iNTT operations require a coefficient order to be permuted after each stage and thus require data movement across the tiles in the CE 407. As a result, distribution of residue polynomials across compute tiles is important in the performance of NTT/iNTT operations. In a distributed computation, coefficients from each residue is distributed across a plurality (e.g., all) tiles and operations are performed on one residue at a time before moving on to subsequent residues. As a result, the latency of homomorphic operations decrease as the ciphertext modulus is scaled in the leveled HE schemes, due to fewer RNS residues. Further, corresponding coefficients of all residues are available in the same compute tile for operations such as fast base conversion, where coefficients from different residues interact with each other.

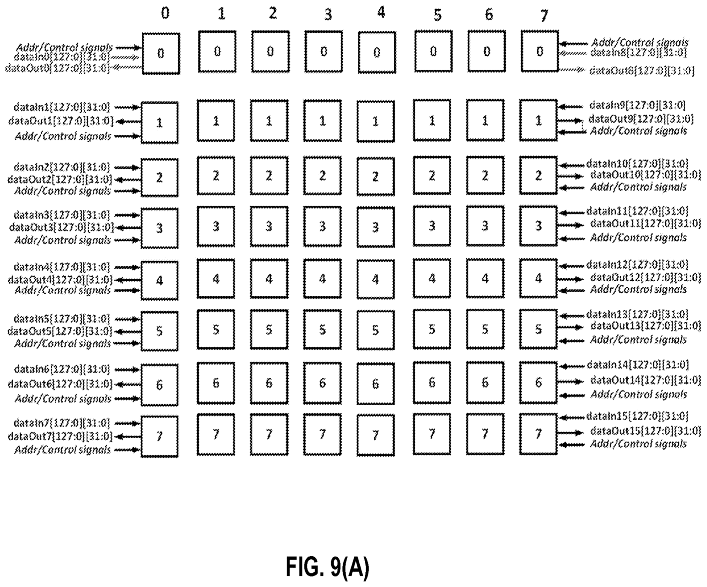

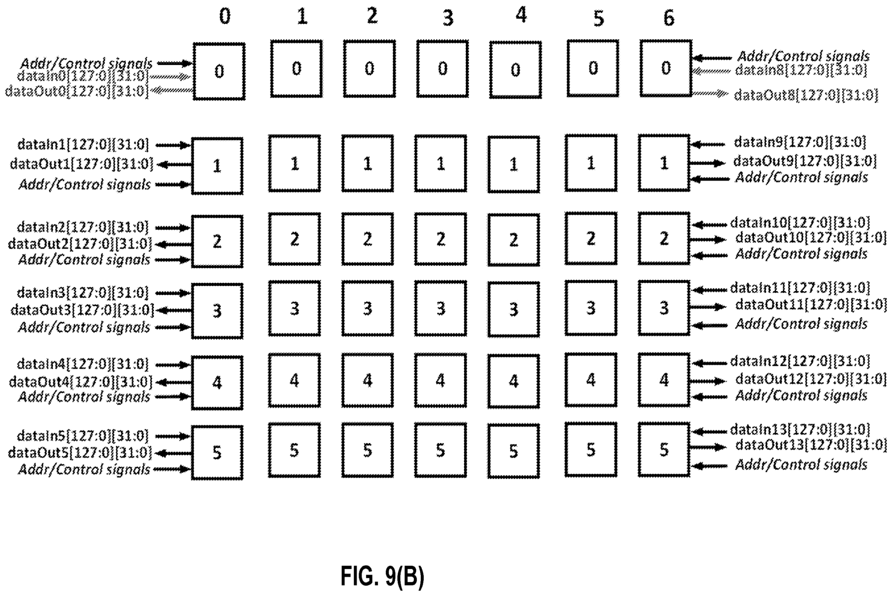

The modularity of the tile-base design allows for the scaling of the CE 407 based on the compute requirements of the workload. FIGS. 9(A)-(B) illustrate examples of scaling. FIG. 9(A) illustrates an 8x8 array which can be scaled down to the 6x7 array of FIG. 9(B). An extra column of tiles can be added or removed from a tile array without significantly modifying the compute element tile design. Similarly, extra rows of tiles can be added or removed from the tile array to scale the array dimension vertically. Since the inter-tile communication network is designed to connect by abutment, scaling tile array dimensions provides an elastic connectivity of tiles to neighboring tiles, while also providing an input/output path to connect to higher levels of memory.

As noted above, the compute elements use a butterfly datapath. In particular, the butterfly datapath is reconfigurable to performs polynomial arithmetic operations including decimation-in-time (DIT) and decimation-in-frequency (DIF) computations for NTT operations in FHE workloads. The butterfly datapath executes a SIMD polynomial instruction set architecture (or extension thereof) which includes instructions for polynomial addition, polynomial multiplication, polynomial multiply and accumulate, polynomial NTT, and polynomial INTT that cause a reconfiguration and polynomial operation. Note that polynomial load and store instructions may not need not to use the butterfly datapath.

In some examples, a polynomial load (pload) instruction includes an opcode for loading a polynomial and one or more fields to indicate a memory source location and one or more fields to indicate a destination for the load (e.g., scratchpad, HBM, register file, etc.).

In some examples, a polynomial store (pstore) instruction includes an opcode for storing a polynomial and one or more fields to indicate a memory destination location and one or more fields to indicate a source for the store (e.g., scratchpad, HBM, register file, etc.).

In some examples, a polynomial add (padd) instruction includes an opcode for adding to source polynomials and storing the result in a destination and one or more fields to indicate the source locations and one or more fields to indicate a destination for the result (e.g., scratchpad, HBM, register file, etc.). Note that the source polynomials are usually loaded before the operation. Note that the addition is of polynomial coefficients in some examples.

In some examples, a polynomial multiplication (pmul) instruction includes an opcode for multiplying to source polynomials and storing the result in a destination and one or more fields to indicate the source locations and one or more fields to indicate a destination for the result (e.g., scratchpad, HBM, register file, etc.). Note that the source polynomials are usually loaded before the operation. Note that multiplication is of polynomial coefficients in some examples.

In some examples, a polynomial multiply and accumulation (pmac) instruction includes an opcode for multiplying to source polynomials and accumulating the result with the existing value inf the destination and storing the result in the destination and one or more fields to indicate the source locations and one or more fields to indicate the source/destination for the result (e.g., scratchpad, HBM, register file, etc.). Note that the source polynomials are usually loaded before the operation. Note that multiply-accumulate is of polynomial coefficients in some examples.

In some examples, a polynomial NTT (pNTT) instruction includes an opcode for performing a NTT operation on a polynomial (already loaded) using twiddle factors and storing the result in a destination and one or more fields to indicate the source location of one or more polynomials and an indication of the twiddle factors (or a location storing the twiddle factors) and one or more fields to indicate a destination for the result (e.g., scratchpad, HBM, register file, etc.). Note that the source polynomial(s) are usually loaded before the operation. Note that NTT is of polynomial coefficients in some examples.

In some examples, a polynomial INTT (pINTT) instruction includes an opcode for performing an INTT operation on a polynomial (already loaded) using twiddle factors and storing the result in a destination and one or more fields to indicate the source location of one or more polynomials and an indication of the twiddle factors (or a location storing the twiddle factors) and one or more fields to indicate a destination for the result (e.g., scratchpad, HBM, register file, etc.). Note that the source polynomial(s) are usually loaded before the operation. Note that NTT is of polynomial coefficients in some examples.

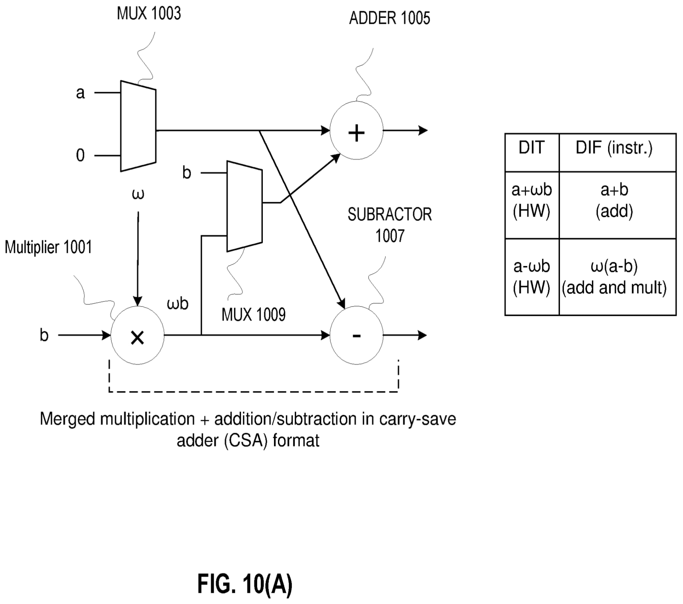

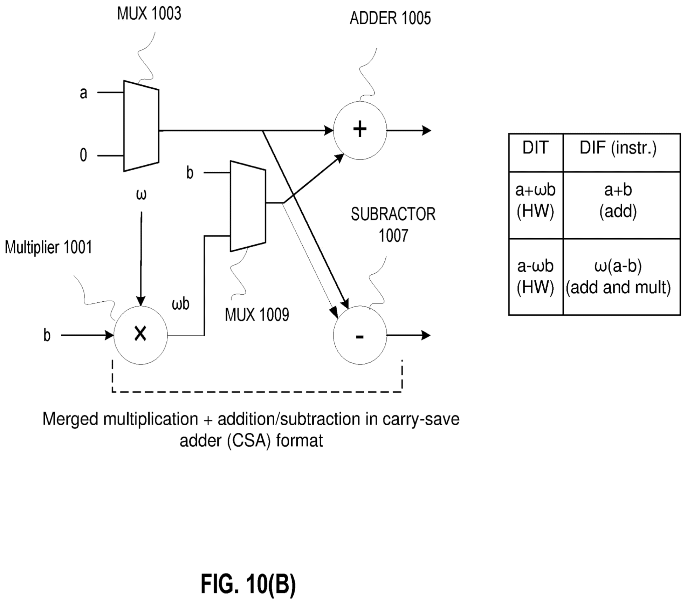

FIGS. 10(A)-(B) illustrate examples of a reconfigurable DIT/DIF butterfly circuit. This circuit natively computes only the DIT butterfly. A modular multiplier 1001 is coupled to an adder 1005 and subtractor 1007. Multiplexers (e.g., mux 1003 and mux 1009) are used to channel data appropriately during add, multiply, multiply-accumulate, NTT, and inverse-NTT operations. Sequential computations of DIF are supported by calculating a+b and a-b outputs followed by ω*(a-b) in a subsequent cycle. Simplifying the datapath to compute only DIT natively results in a compact implementation by enabling the entire datapath to remain in carry-save format with carry-propagation relegated to the very end of the logic. FIGS. 10(A) and 10(B) differ in how data gets to the subtractor 1007.

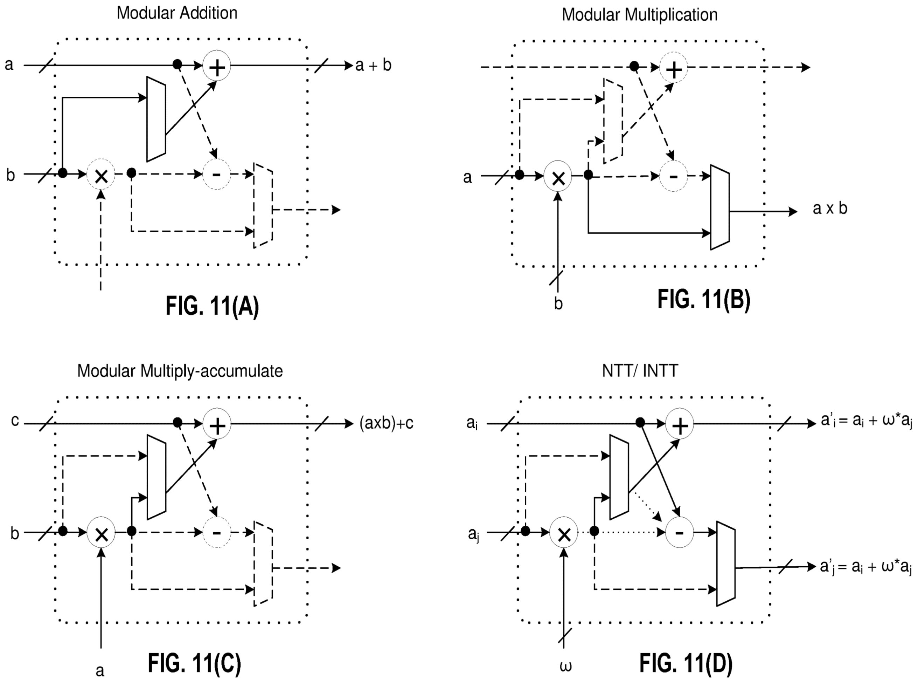

FIGS. 11(A)-(D) illustrate examples of the butterfly circuit configured to perform a specific operation. Note that these examples are based off of FIG. 10(A) but the changes to be based on FIG. 10(B) are minimal and really only factor into FIG. 11(D) and both paths ae shown using dotted lines. In these illustrations aspects that are dashed are configured to not be used. In some examples, the subtractor is performed with using 2's complement addition.

FIG. 11(A) illustrates examples of the butterfly circuit configured to perform a modular addition of a + b. The values of a and b may be of any size such as 32-bit, 512-bit, etc. Typically, the values of a and b are integers.

FIG. 11(B) illustrates examples of the butterfly circuit configured to perform a modular multiplication of a x b. The values of a and b may be of any size such as 32-bit, 512-bit, etc. Typically, the values of a and b are integers.

FIG. 11(C) illustrates examples of the butterfly circuit configured to perform a modular multiply-accumulate of (a x b) + c. The values of a, b, and c may be of any size such as 32-bit, 512-bit, etc. Typically, the values of a, b, and c are integers.

FIG. 11(D) illustrates examples of the butterfly circuit configured to perform NTT or iNTT to generate a+ω*b and a-ω*b. The values of a, b, and ω may be of any size such as 32-bit, 512-bit, etc. Typically, the values of a, b, and ω are integers.

Both NTT and iNTT operations are important computations in FHE workloads. For this reason previously published works use multiplexers to reconfigure a datapath to support both DIF and DIT operations. Unfortunately, this results in a substantial increase in delay and area overheads.

Using the butterfly circuit of FIG. 11(D), for a DIT operation, inputs ω and b are multiplied to obtain ω*b and then added to or subtracted from input a to produce outputs a+ωb and a-ωb. A multiplexor routes inputs directly to the adder during a polynomial add operation (note that a mux is not used in the subtraction).

Using the butterfly circuit of FIG. 11(D) a DIF operation is a two-step process. In the first step, the output a+b and a-b are computed using the adder and subtractor respectively. In the second step, the subtractor output is fed back into the multiplier to generate w*(a-b).

In some examples, the DIT butterfly is implemented by first computing the multiplier output (w*b) in a carry-save format. This output is then reduced using Montgomery reduction, again in carry-save format. The adder input 'a' is then added into the reduced product in carry-save format using a carry-save adder (CSA) and then the carry-propagation is completed in the final output adder to generate a+ ω*b.

NTT and iNTT are critical operations for accelerating FHE workloads. NTTs convert polynomial ring operands into their CRT equivalents, thereby speeding up polynomial multiplication operations from O(n²)to O(n).

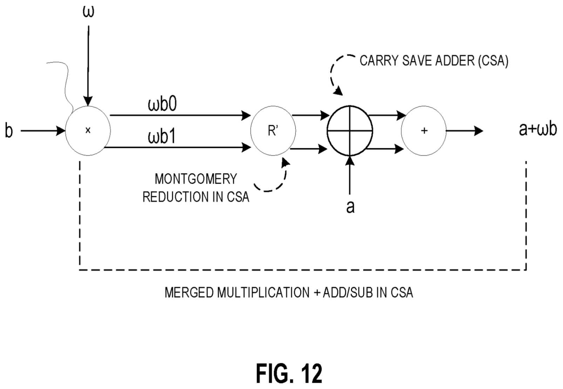

FIG. 12 illustrates examples of a butterfly datapath with CSA and Montgomery reduction. The native DIT butterfly is implemented by first computing the multiplier output (ω*b) in carry-save format (using carry-save adders or a carry-save multiplier). This output is then reduced using Montgomery reduction (in carry-save format). The adder input 'a' is then added into the reduced product in carry-save format using a carry-save adder (CSA) and then finally, the carry-propagation is completed in the final output adder to generate a+ ω*b.

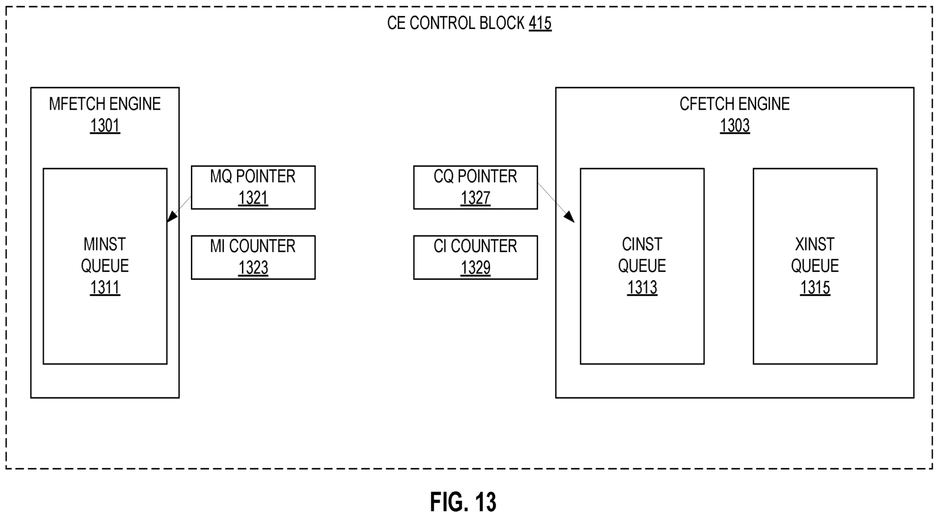

FIG. 13 illustrates examples of hardware support for multiple, distinct threads that use different resources. In some examples, the hardware support is provided in CE control block 415. As shown, each of the threads is associated with its own instruction queue of instructions to execute (memory instruction (MINST) queue 1311 for the local memory 411, cache instruction (CINST) queue 1313 for the SPAD memory 410, and execution instruction (XINST) queue 1315.

In some examples, each queue has its own engine (state machine) to maintain the queue. In some examples, such as what is illustrated, the local memory has its own engine (MFETCH engine 1301), and an engine (CFETCH engine 1303) is shared by the CINST queue 1313 and XINST queue 1315. An instruction pointer is maintained for the MFETCH engine as MQ pointer 1321, and an instruction pointer is maintained for the CFETCH engine 1303 as CQ pointer 1327.

Supporting SID architectures requires support throughout a compiler, debugger, and an instruction set architecture (ISA). Architectures that support SID may require multiple distinct ISAs or ISA extensions with one for each thread type. These ISAs (or extensions) support cross thread synchronization between these thread types to enforce cross thread data dependencies.

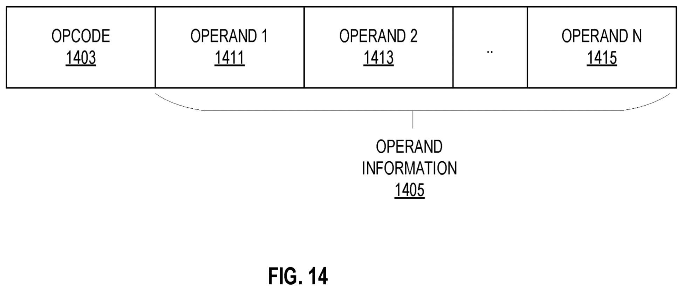

FIG. 14 illustrates examples of an instruction format used by the instructions of the threads. In particular, each instruction has an opcode 1403 used to at least partially define the operation to be performed upon a decoding of the instruction. In some examples, a function field (not shown) is used when the opcode 1403 is shared for a class of instructions.

An instruction may also include operand information 1405 (note that some instructions may not have operands). In this illustration there are fields for operand 1 1411, operand 2 1413, and operand N 1415. In some examples, each operand is an immediate value. For example, an operand may be a memory address, a counter value, etc. In some examples, one or more of the operands are immediates and one or more of the operands are register or memory information.

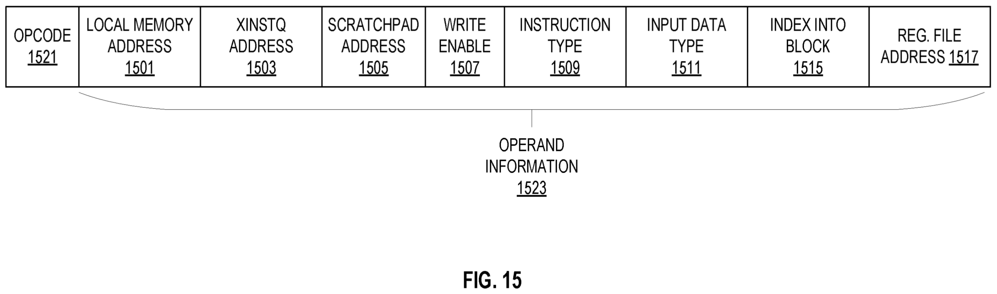

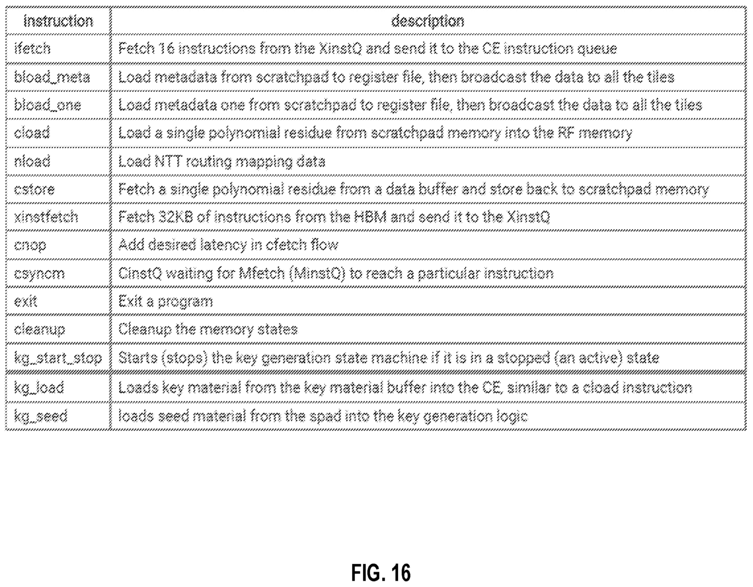

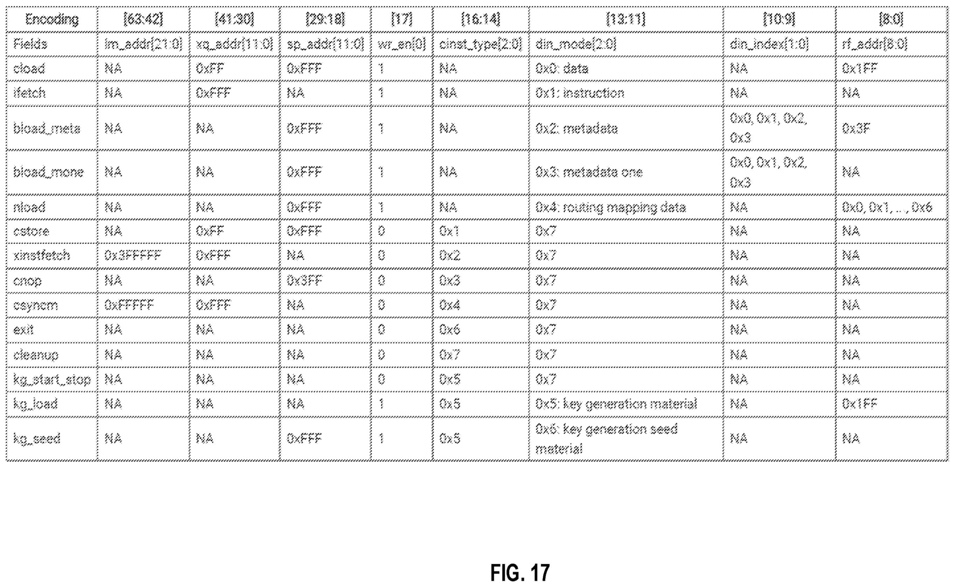

The Cfetch (cache fetch) ISA (or extension) provides loads and stores to move data between the compute element and the scratch pad. FIG. 15 illustrates examples of a format for a Cfetch ISA (or extension) instruction. The format includes a field for an opcode 1521 and one or more fields for operand information 1523 which may include or more of: 1) a local memory address field 1501, 2) a XINSTQ address field 1503, 3) a scratchpad address field 1505, 4) a write enable field 1507 to indicate if the instruction is to write to memory, 5) an instruction type field 1509, 6) an input data type field 1511 (e.g., data, instruction, metadata, routing mapping data, key generation mater, key generation seed material, etc.), 7) an index into a block field 1513, and/or 8) a register file address field 1517. FIG. 16 illustrates examples of Cfetch ISA (or extension) instructions and their descriptions. FIG. 17 illustrates examples of encodings of Cfetch ISA (or extension) instructions.

The lm_addr field provides an address to HBM 411. The ps_addr field provides an address to SPAD 410. The xq_addr field provides an address into the XinstQ 1315.

The wr_en field indicates if the instruction involves a write tom memory.

The din_mode field indicates an input data type for cfetch instructions. For example, data, instruction, metadata, routing mapping data, key generation material, key generation seed material.

The din_index field indicates an index into a data block.

The cinst_type field helpds encode the cfetch instruction identifier.

The rf_addr field provides a register file address.

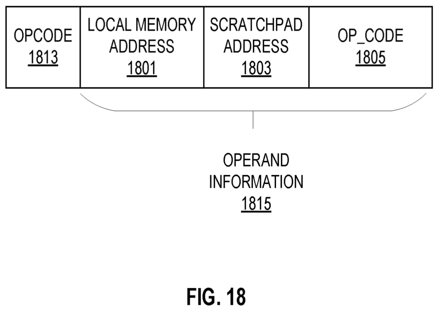

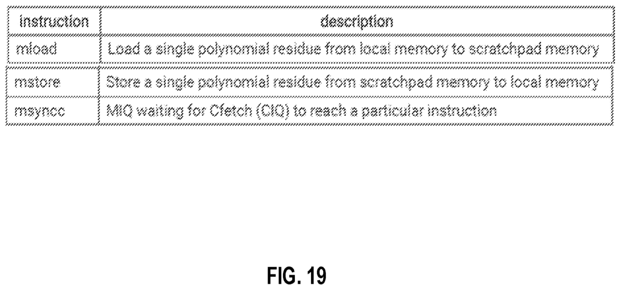

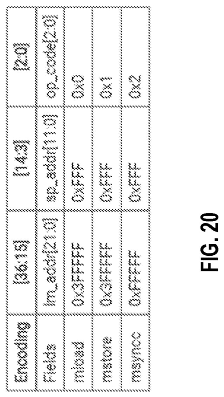

The Mfetch (memory fetch) ISA (or extension) provides loads and stores to move data between the scratchpad and local memory. FIG. 18 illustrates examples of a format for a Mfetch ISA (or extension) instruction. The format includes a field for an opcode 1813 and one or more fields for operand information 1815 which may include or more of: 1) a local memory address field 1801, 2) a scratchpad address field 1803, and/or 3) an op_code (function) field 1805 indicating if the instruction is an mload, mstore, or mysncc instruction. FIG. 19 illustrates examples of Mfetch ISA (or extension) instructions and their descriptions. FIG. 20 illustrates examples of encodings of Mfetch ISA (or extension) instructions.

The timing of short thread launches provides natural synchronization points. In some examples, SID ISAs include synchronization instructions to allow for instruction queues to be in sync. Synchronization instructions reference a memory instruction counter (MI counter 1323) and/or a cache instruction counter (CI counter 1329) and stall until the counter it is relying on hits a particular value. A CsyncM instruction has the CINST queue 1313 waiting for an Mfetch instruction to reach a particular instruction counter value. For example, CsycnM 1032 will stall the CQ pointer 1327 until the MI counter 1323 is greater than 1032. A MsyncC instruction has the MINST queue 1311 waiting for a Cfetch instruction to reach a particular instruction counter value. Note that the instruction pointers and counters are typically stored in registers.

An execution ISA (or extension) provides various math operations (such as the polynomial, NTT, and iNTT instructions detailed earlier) and the movement of data within the compute register file.

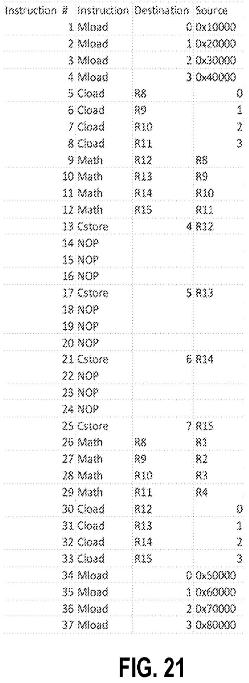

Programs include instructions to move data in and out of memory as well math or logic instructions for compute. In current architectures, instructions co-exist in a single monolithic instruction stream and scheduled accordingly. FIG. 21 illustrates examples of a current program for an FHE accelerator such as FHE accelerator 403. As illustrated, this program includes data movement instructions such loads to from local memory 411 to scratchpad memory 410 (MLOAD), loads from scratchpad memory 410 to a register file 601 (CLOAD), and stores from a register file 601 to scratchpad memory 410 (CSTORE) and math instructions (shown as math) that are performed in tiles 409 of the CE 407. As shown, the program is not efficient as there is a delay for data to move.

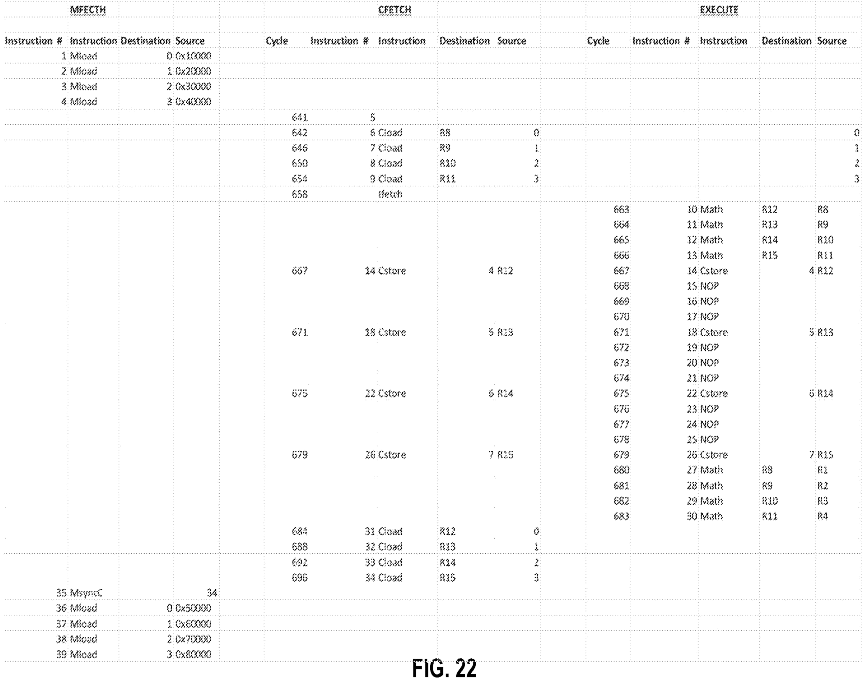

FIG. 22 illustrates examples of the program of FIG. 21 but optimized for SID. SID enables/requires the traditional program to be decomposed into different tasks with each task corresponding to system resource. In the case of the FHE accelerator 403 those resources are local memory 411, scratchpad memory 410, and compute (CE407 broken down into tiles 409 which use a register file 601 and butterfly compute units 603). The program is therefore decomposed into three threads: 1) an Mfetch thread for moving data from the local memory 411 to the scratchpad memory 410, 2) a Cfetch thread for moving data from the scratchpad memory 410 to compute 407, and 3) an execute thread for performing the compute operations. These three threads are essentially different programs with each thread being loaded separately and exclusively operating on a set of private resources. In contrast with other threading approaches the SID threads are executed in different physical regions with access to different physical resources.

Three instruction streams shown are execute (xinst) on the right, Cfetch (cinst) in the middle, and the mfetch instruction on the left. Mload instructions in the Mfetch thread are used to load data from the local memory 411 to the scratchpad 410. Note that these instructions include a source address and destination location. When those instructions are done, the CsyncM instruction can execute in the Cfetch thread. The Cfetch thread loads the data that was just loaded to the scratchpad 410 to particular register file locations in the execute thread. When those loads are done, an Ifetch instruction is used to pull math instructions from the XINST queue 1315 to the execution tiles where those math instructions are executed.

Upon the completion of the math instructions, Cstore instructions are performed to store the results of the math operations back to the scratchpad 410. Note that the Cfetch thread has the same instructions for synchronization.

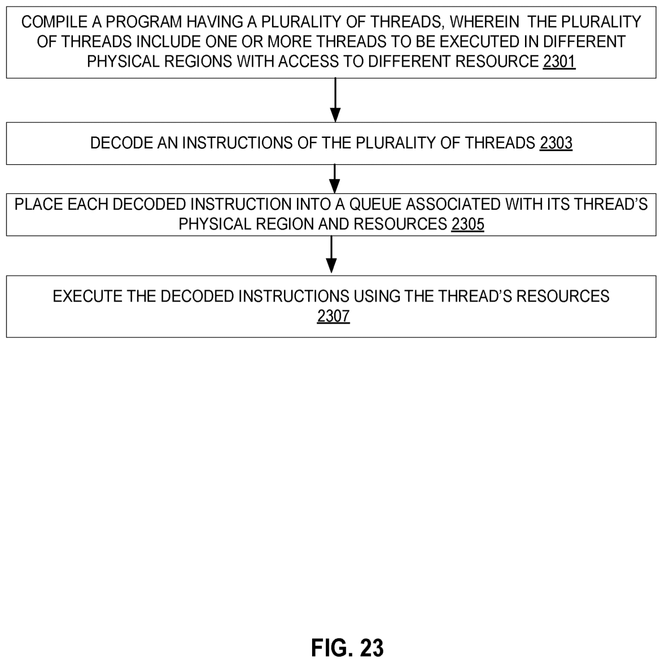

FIG. 23 illustrates examples of a method for SID usage. A program having a plurality of threads is generated at 2301. The plurality of threads include one or more threads to be executed in different physical regions with access to different resources. For example, Mfetch, Cfetch, and Execute threads are generated. The plurality of threads may be generated statically (e.g., by a compiler or by software re-configuring existing threads) or dynamically (e.g., by a just-in-time (JIT) compilation).

Instructions of the plurality of threads are decoded at 2303. In some examples, this decoding is performed on a core. In other examples, this decoding is performed on an accelerator that will execute the threads.

Each decoded instruction is placed into a queue associated with its thread's physical region and resources at 2305.

The decoded instruction using the thread's resources at 2307.

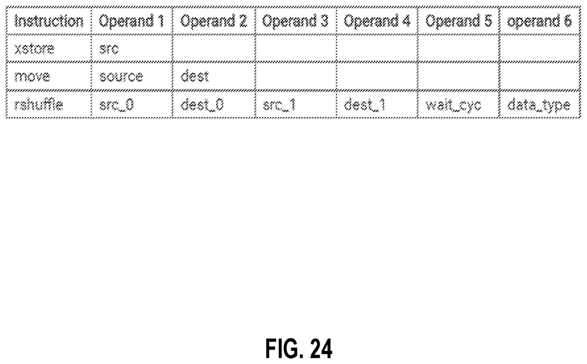

In some examples, the FHE accelerator 403 supports memory instructions and compute instructions. FIG. 24 illustrates examples of one or more supported memory instructions and their operands. A first instruction is an "xtore" instruction stores a polynomial residue from the register file 601 to a data buffer (e.g., SPAD 410).

A "move" instruction copies data from one register file back to a different register file bank in a compute tile as addressed by the source and destination fields.

A "rshuffle" instruction is a router move instruction. Rshuffle takes two register file locations from a source tile and causes the data to be sent to a destination tile's register tile. The "src" and "dest" represent particular register files. In some examples, a number of NOPs after the rshuffle are indicated in the wait_cycle operand. The data_type operand defines the data type of NTT, iNTT, or miscellaneous.

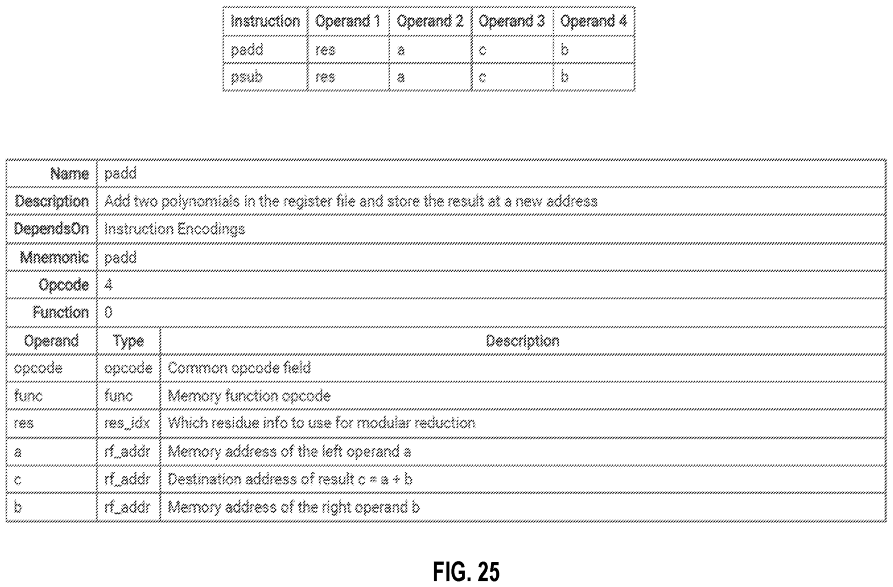

FIGS. 25-34 illustrate examples of polynomial instructions. FIG. 25 illustrates examples of a polynomial add instruction. The execution of this instruction causes two polynomials in the register file to be added together and stored in a particular memory address.

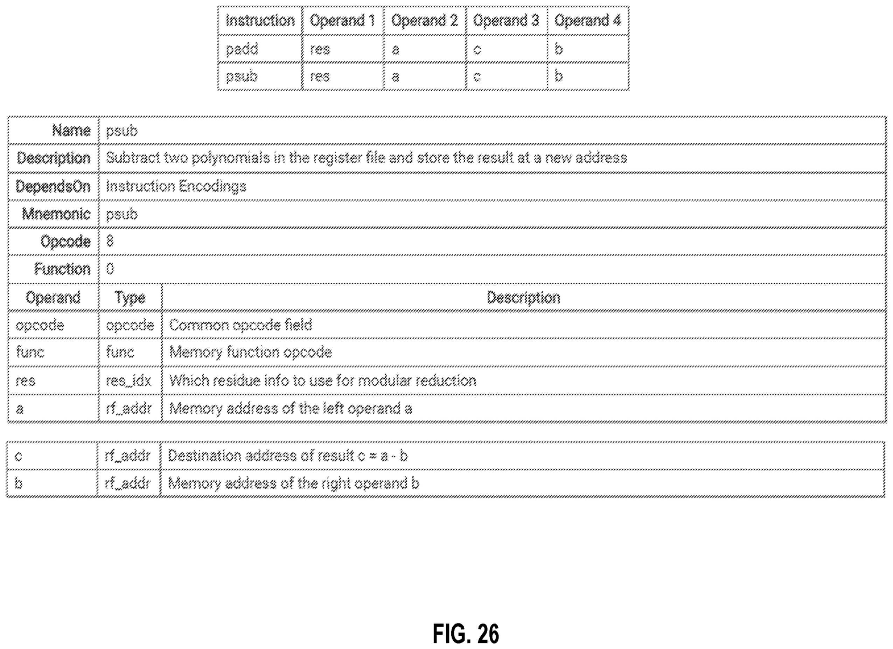

FIG. 26 illustrates examples of a polynomial subtract instruction. The execution of this instruction causes the subtraction of a polynomial in the register file from another polynomial in the register file and the result stored in a particular memory address.

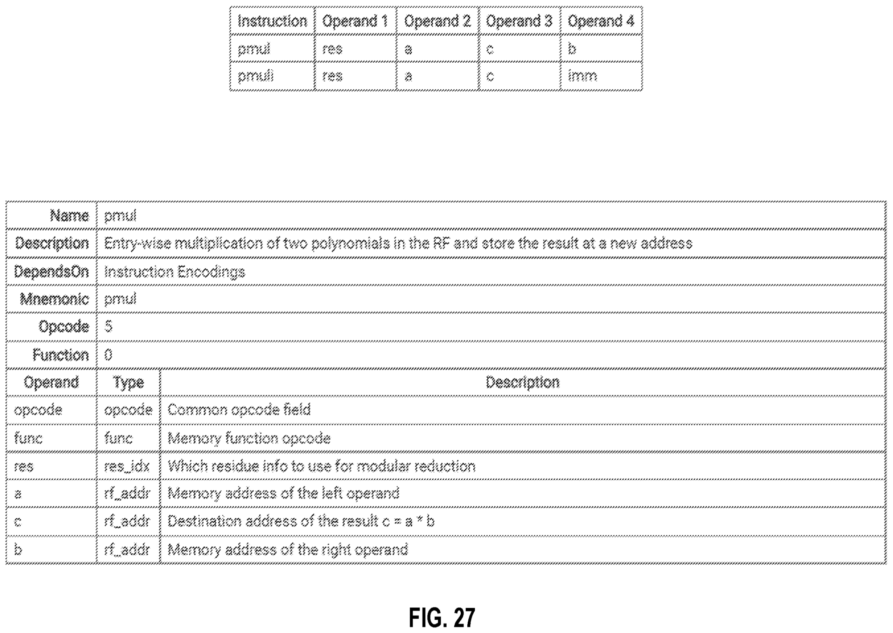

FIG. 27 illustrates examples of a polynomial multiplication instruction. The execution of this instruction causes an entry-wise multiplication of two polynomials in the register file (as addressed) and the result stored in a particular memory address.

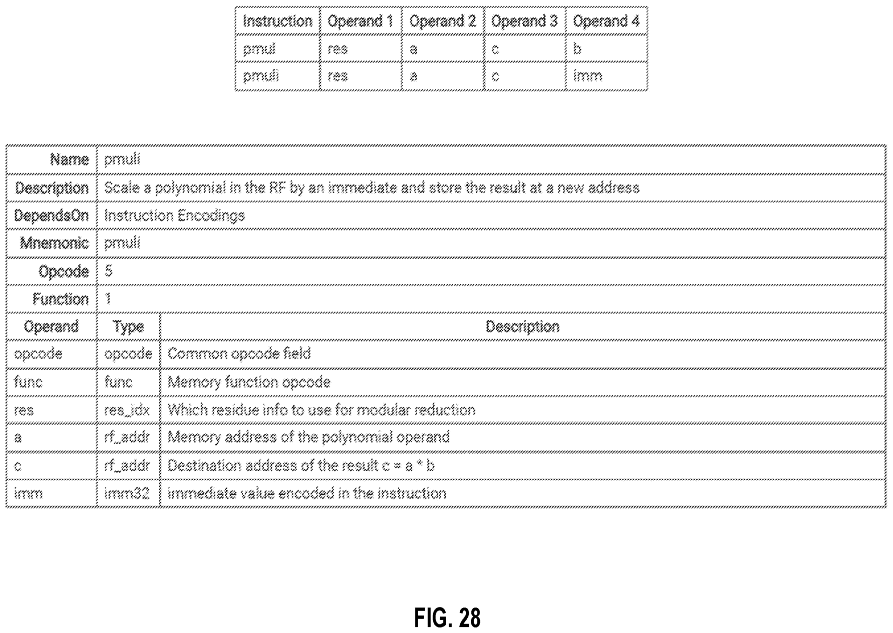

FIG. 28 illustrates examples of a polynomial multiplication instruction. The execution of this instruction causes a scaling of a polynomial in the register file by an immediate and the result stored in a particular memory address.

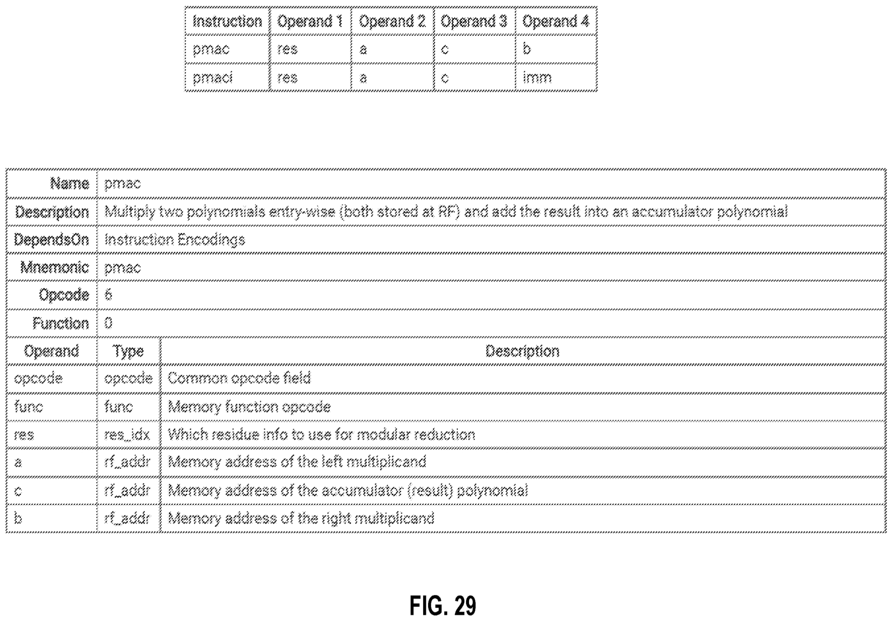

FIG. 29 illustrates examples of a polynomial multiplication and accumulation (MAC) instruction. The execution of this instruction causes two polynomials of the register file to be multiplied entry-wise and added to an accumulator polynomial and the result stored in a particular memory address.

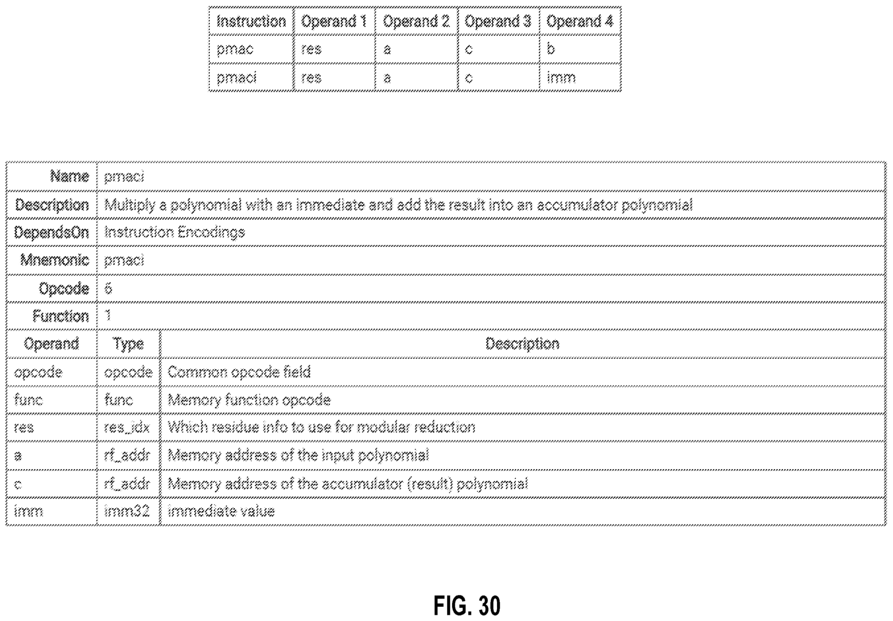

FIG. 30 illustrates examples of a polynomial multiplication and accumulation (MAC) instruction. The execution of this instruction causes a scaling of a polynomial in the register file by an immediate and the result added to an accumulator polynomial stored in a particular memory address.

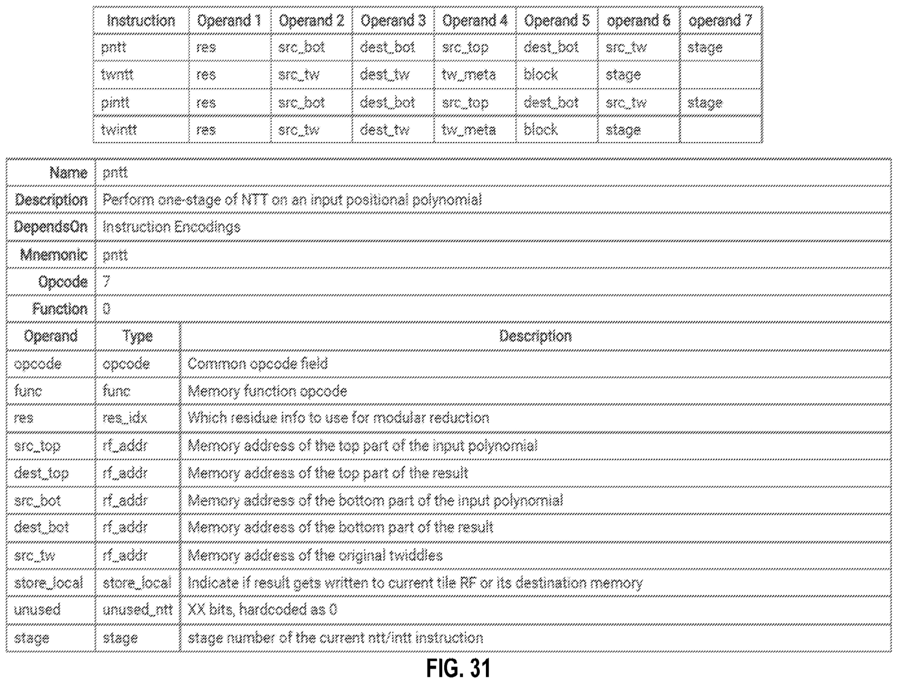

FIG. 31 illustrates examples of an NTT instruction. The execution of this instruction causes one state of an NTT operation to be performed on an input polynomial.

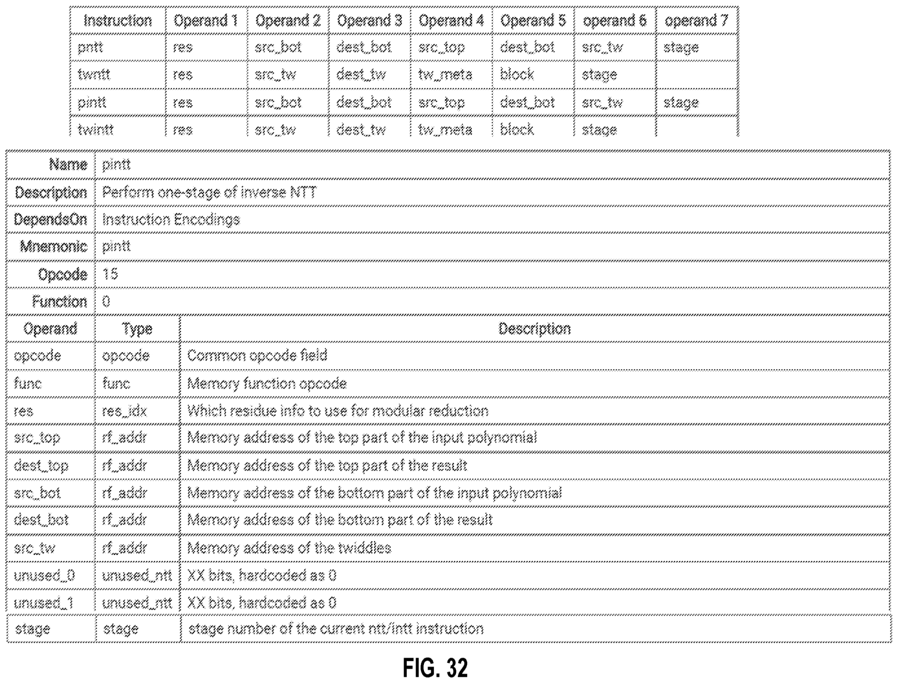

FIG. 32 illustrates examples of an iNTT instruction. The execution of this instruction causes one state of an iNTT operation to be performed on an input polynomial.

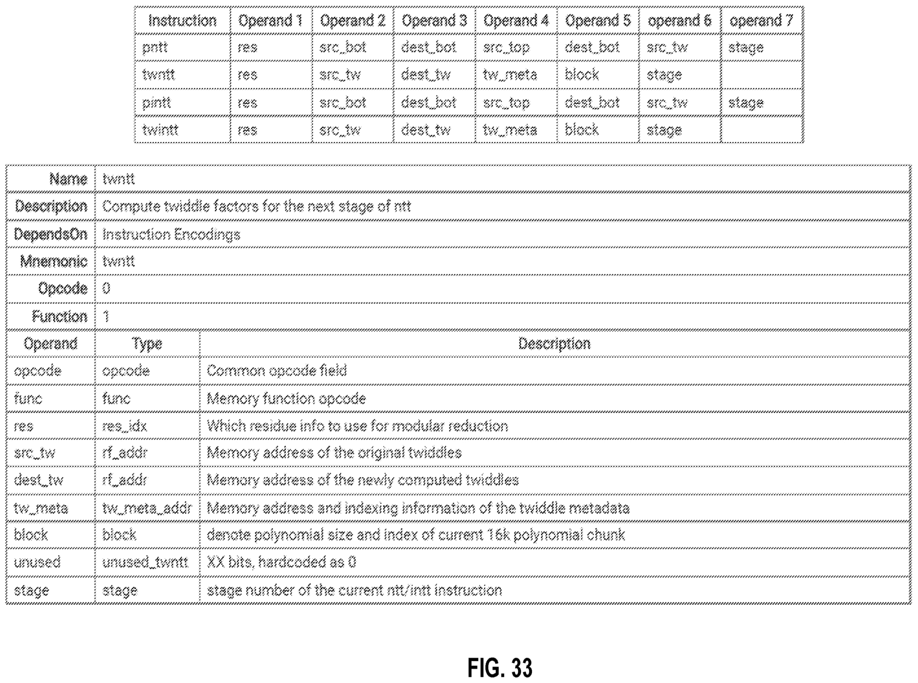

FIG. 33 illustrates examples of a twitter factor generation instruction. The execution of this instruction causes a computation of twiddle factors for an NTT stage.

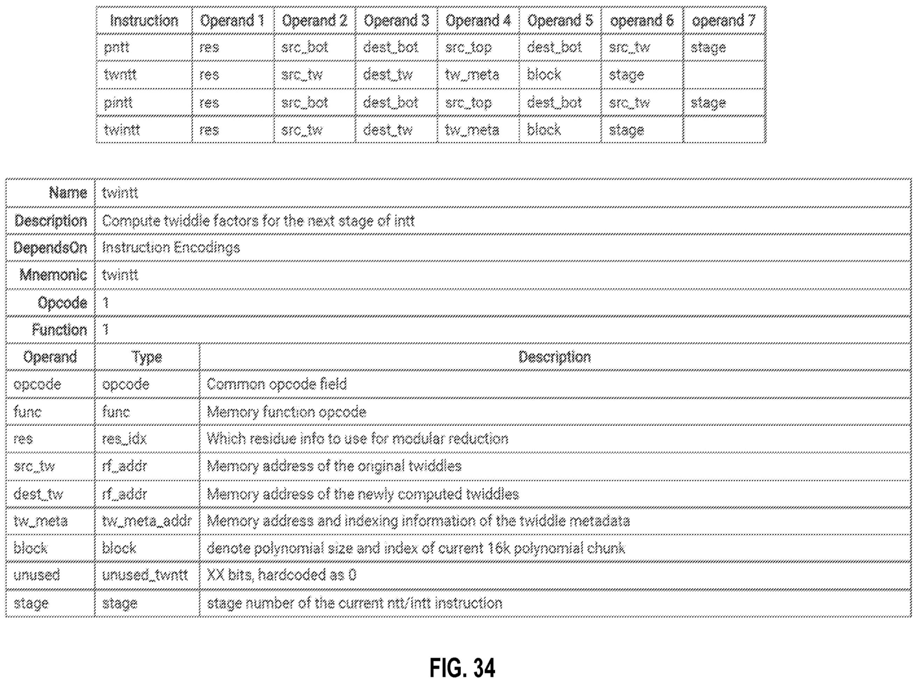

FIG. 34 illustrates examples of a twitter factor generation instruction. The execution of this instruction causes a computation of twiddle factors for an iNTT stage.

In some examples, the FHE 405 supports multiple mechanisms to reduce code size when executing streamed FHE workloads. A first mechanism is to use Ifetch instructions with a XinstQ pointer to specify a bundle to be dispatched. The use of indirection in the Ifetch instruction allows bundles stored in the XinstQ to be reused and reduces total Xinst size. A second mechanism is the use of epochs. An epoch is a large program segment (e.g., ~1 billion instructions) that can exit without the loss of any register file/SPAD/ or memory state, but resets instruction fetch structures likes the CinstQ and MinstQ pointers. This allows large programs to be divided into multiple epochs and even allows the implementation of loop-like idioms through the re-execution of a single epoch multiple times.

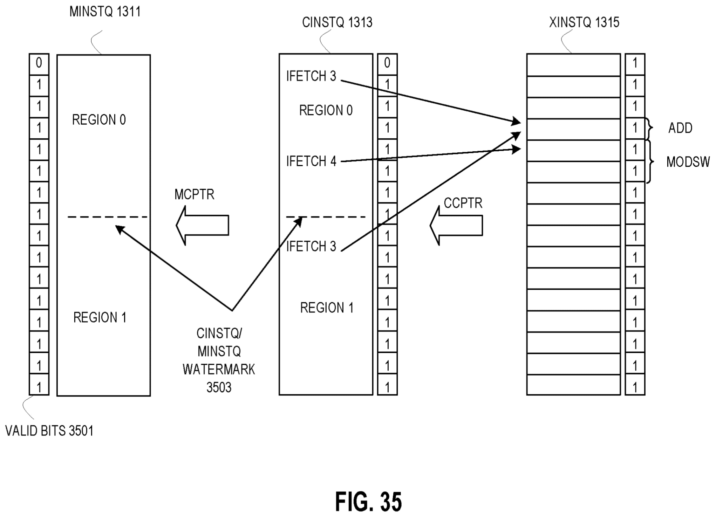

FIG. 35 illustrates examples of instruction queue usage. As shown earlier, within the CCB 415 are three memory structures that store instructions for the CE 407, the MinstQ 1311, CinstQ 1313, and XinstQ 1315. The CCB 415 fetches instructions from these queues and dispatches those instructions to the memory system (e.g., HMB 411 or SPAD 409) or the CE 407 as appropriate. As the CCB 415 executes instructions in the memory and/or cache instruction queues (e.g., MinstQ 1311 and/or CinstQ 1313) new cache instructions (Cinsts) and/or memory instructions (Minsts) must be fetched. These are provided to the MinstQ 1311 and CinstQ 131 under the control of the CCB 415.

In contrast, in some examples, core instructions (Xinsts - e.g., math, etc. instructions) can be reused within the XinstQ 1315 through the use of an Ifetch instruction. The Ifetch instruction can refer to specific bundles in the XinstQ 1315 that need to be dispatched. In this example, Ifetch 3 specifies that that Xinst bundle 3 should get dispatched into the CE 407.

As an Ifetch instruction can specify Xinst bundles (e.g., using xq_addr), the movement of Xinsts into the XinstQ 1315 are through an additional instruction (Xinstfetch) which specifies a memory location (src) and a region of the XinstQ 1315 (dst) to specify the transfer of instructions from memory 411 into the XinstQ 1315. A bundle in the XinsQ 1315 can be re-referenced. In this example, the CinstQ 1313 includes two Ifetch instructions that reference bundle three.

In some examples, each instruction (or bundle) has an associated valid bit 3501. An instruction fetch clears an associated valid bit until instructions have been successfully fetched. The dispatching of pointers stall when the valid bit is cleared.

In some examples, the streaming from MinstQ 1311 and CInstQ 1315 "ping-pong." The MinstQ 1311 and CInstQ 1315 are streamed sequentially. When a progress pointer, MCptr or CCptr crosses a region boundary (e.g., a watermark) 3503 (delineating regions (shown as regions 0 and 1) the other region is fetched. For example, when the MCptr or the CCptr points to region 1, then instructions are fetched for region 0.

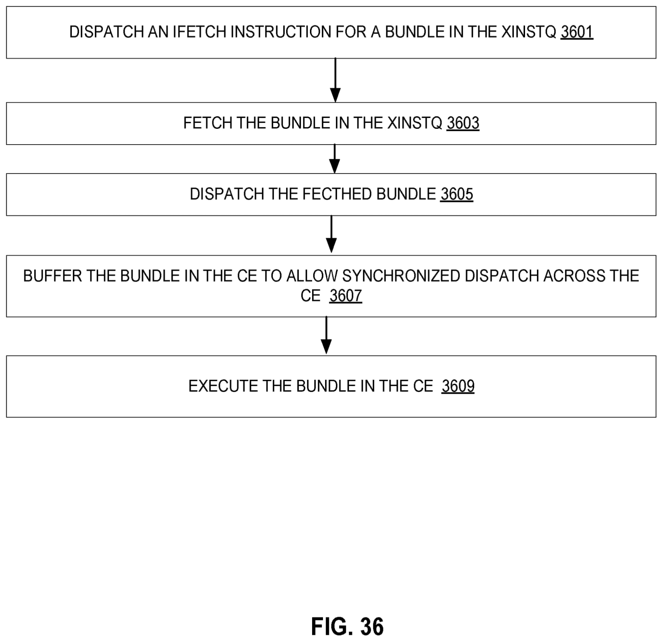

FIG. 36 illustrates examples of Xinst dispatch. An Ifetch instruction is dispatched for a bundle in the Xinstq at 3601. As noted above, an Ifetch instruction can address a bundle of instructions in the Xinstq.

The bundle is fetched according to the Ifetch instruction at 3603.

The fetched bundle is dispatched to the CE at 3605 and buffered in the CE to allow synchronized dispatch across the CE at 3607.

The bundle is executed in the CE at 3609.

The use of indirection in the Ifetch instruction allows bundles stored in the XinstQ 1315 to be reused and reduces total XinstQ 1315 size. This allows large programs to be divided into multiple epochs and even allows the implementation of loop-like idioms through the re-execution of a single epoch multiple times.

In some examples, Cinsts and Minsts use sync instructions (e.g., CsyncM, MsyncC, etc.) to explicitly encode dependencies and locations in memory 410 and the SPAD 411. This may make supporting the reuse of Cinst and Minst for small groups of instructions difficult. In some examples, the FHE accelerator 403 supports the reuse of these instructions at an epoch (e.g., on the order of a hundreds of thousands or a million instructions level. An epoch is a large segment of an FHE program. In some examples, a program includes multiple epochs.

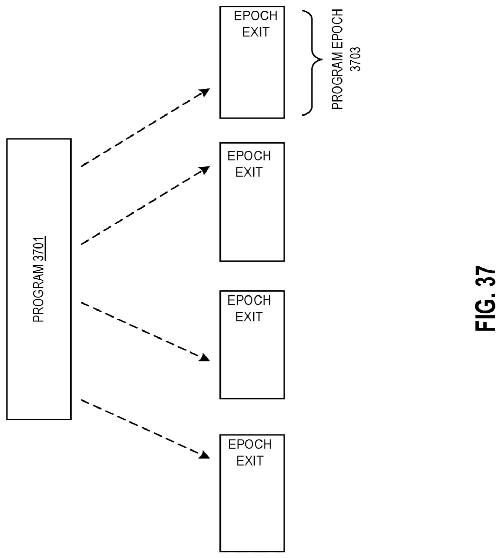

FIG. 37 illustrates examples of a FHE program having multiple epochs. As illustrated, the FHE program 3701 comprises four epochs 3703 with each epoch have an exit. In some examples, the exit instruction clears the CinstQ(s) 1313/MinstQ(s) 1311 and resets their respective pointers (CQ pointer 1327 and MQ pointer 1321). The exit instruction leaves the overall RF 601, SPAD 411, and memory 411 state intact. This allows the reset of the sync pointers (e.g., instruction pointers CIptr, MIptr, and/or counter pointers MCptr and CCptr for MsynC and CsyncM comparisons), which would otherwise the prevent the assembly of very large programs, but retains memory state to ensure that the program can continue to make forward progress (e.g., allowing a next epoch to continue execution).

In some examples, an epoch has a minimum number of cycles to execute (e.g., 64 cycles). The exit instruction can help to maximize the efficiency of short and/or incomplete epochs. In some examples, the exit instruction has an opcode and a minor opcode (function) when it is shared for a class of instructions. For example, there may be an exit instruction for bundles and an exit instruction for epochs that have the same opcode, but different minor opcodes. In some examples, the same exit instruction may be used for both cases.

Cinsts and Minsts can be reused at the epoch level, since a single epoch could be executed several times to complete a much larger program, providing some of the functionality convention programs get from loops. Xinsts can be reused by providing a level of indirection.

Compute intensive workloads such as deep learning (DL) have motivated a structured compute model offered by GPUs. Compute tasks like matrix math are decomposed into independent threads, largely isolated during execution on one of many compute units. As DL algorithms scale, data movement across the NOC (Network On Chip) from memory and between compute units, limit future performance. Workloads like fast Fourier transforms (FFT) such as used in image and signal processing, emerging DL algorithms based on Clifford algebras, or state space models are already constrained by NOC data movement.

Prescient computing relies on the regular structure of compute workloads to separate data movement from math or logic (e.g., Boolean) instructions. Isolated from the variable latency of memory, latencies within the compute units can be carefully analyzed exposing the exact timing of data movement requests. Together these allow data movement routing solutions to be analyzed and constructed at compile time. Using this analysis, a pre-plan of data movement in the network can be made which mitigating a mesh's Achilles heel of high latency and contention. For example, performing the large data shuffles required for FFTs can be pre-planned (e.g., planned at compilation).

To enable compile time planning of data movement the NOC data routes available, unpredictable latencies should be minimized to avoid timing disruptions there should be a low latency path (from memory) into the network routers to allow different network routing solutions to be loaded when executing different algorithms. The single largest source of latency variability is the DRAM data access due to design features like refresh. The architecture detailed, for example with respect to FIG. 4 decouples data movement to and from memory (e.g., scratchpad 410 and/or HBM 411) and operations within the compute engine 407 NOC can dramatically improve the predictability of NOC data movement timing.

FIG. 22 illustrates how a compiler might partition a traditional program into separate threads for controlling data movement (minst, cinst) and another thread for controlling math and shuffling operations that use the NOC (note that no shuffling operations are shown in the figure).

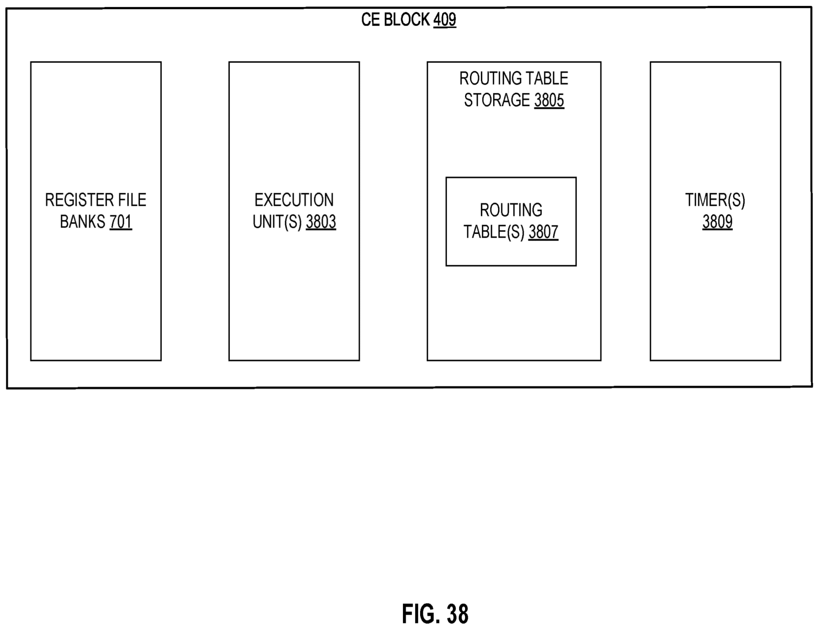

With predictable execution latencies in the CE blocks 409 (or tiles), the tiles in the compute engine 407 can be programmed to be self-synchronizing. To support being self-synchronization, each CE block 409 may include support that has not been previously discussed. FIG. 38 illustrates examples of a CE block.

As shown in FIG. 38, a CE block 409 includes register file banks 701 (as shown earlier) and execution unit(s) 3803. In some examples, the execution unit(s) 3803 include butterfly units 703. The execution unit(s) 3803 may also include non-butterfly units such as data movement units. In some examples, the butterfly units 703 can be used to move data.

A CE block 409 may also include routing table storage 3805 to store one or more routing tables 3807. A routing table 3807 stores one or more pre-planned routes for data movement. The routing table 3807 is configurable by loading a table using one or more instructions (e.g., one or more synchronization instruction). In some examples, a CE block 409 includes one or more configurable timers 3809 (e.g., registers) to allow for self-synchronization of the CE blocks. The timer(s) 3809 may be set through the usage of an instruction as detailed below. In some examples, execution units of other accelerator types (e.g., a GPU) support software controlled synchronization through timers.

In a perfectly deterministic machine, self-synchronization can occur through the simultaneous execution of a shuffle instruction inserted by the compiler to execute concurrently across all tiles. A machine with approximate determinism uses a timer value with the shuffle instruction to allow faster tiles stall briefly until the right time to execute the shuffle instruction.

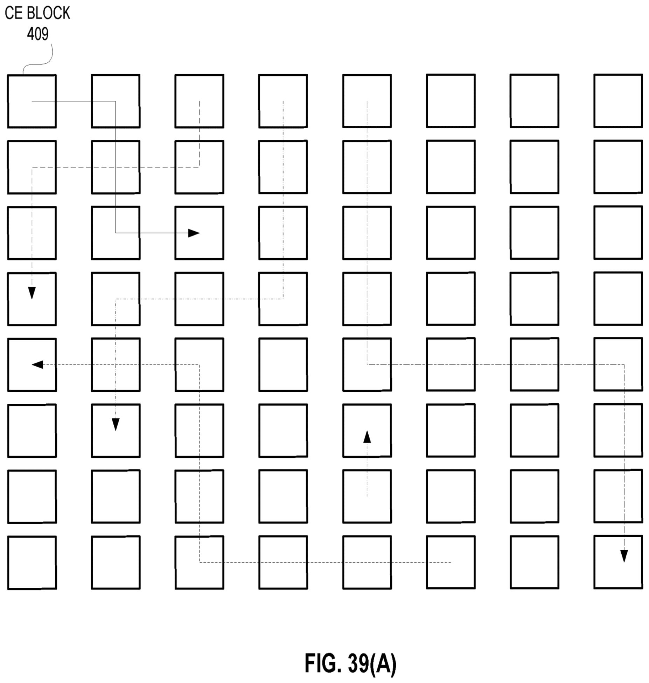

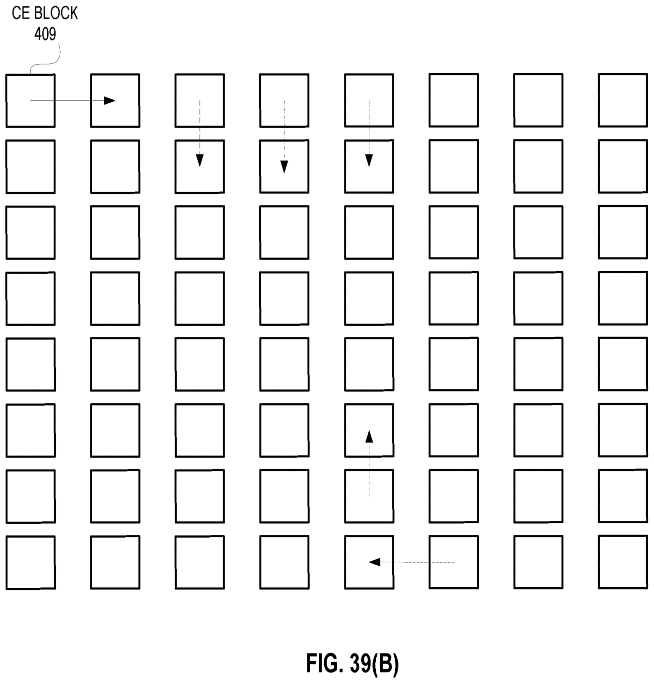

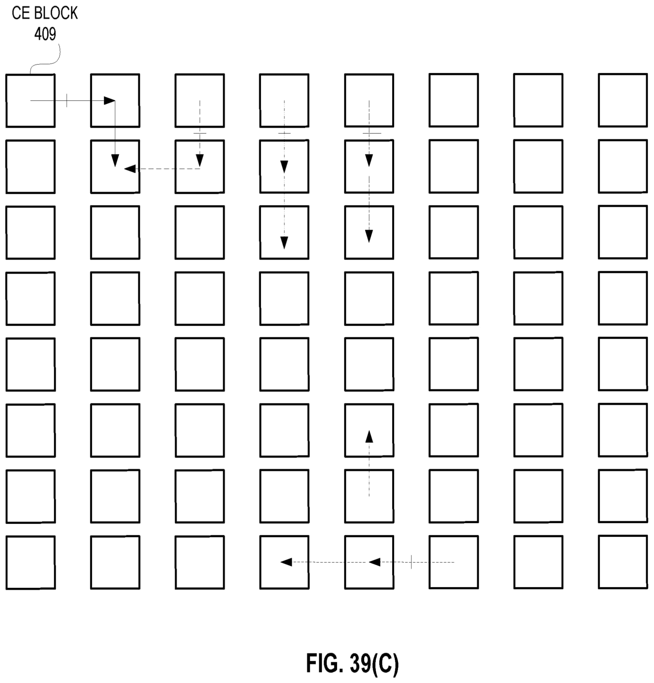

A compiler can use a place and route algorithm to plan the optimal routes for the data movement a particular movement (e.g., transpose, etc.) requires. FIGS. 39(A)-(C) illustrate examples of pre-routes usage. FIG. 39(A) shows a plurality of pre-planned routes constructed by a compiler that do not require co-ordination between the tiles. FIG. 39(B) shows the first "hop" or movement in each of the pre-planned routes. Note that the first hops may be performed on the same cycle or cycles. FIG. 39(C) shows the second hop of each pre-planned route that are executed concurrently with another first hop (delineated with a dash on the movement line) of a second data movement operation. The compiler's offline contention analysis ensures a contention free route for each successive chunk of data movement.

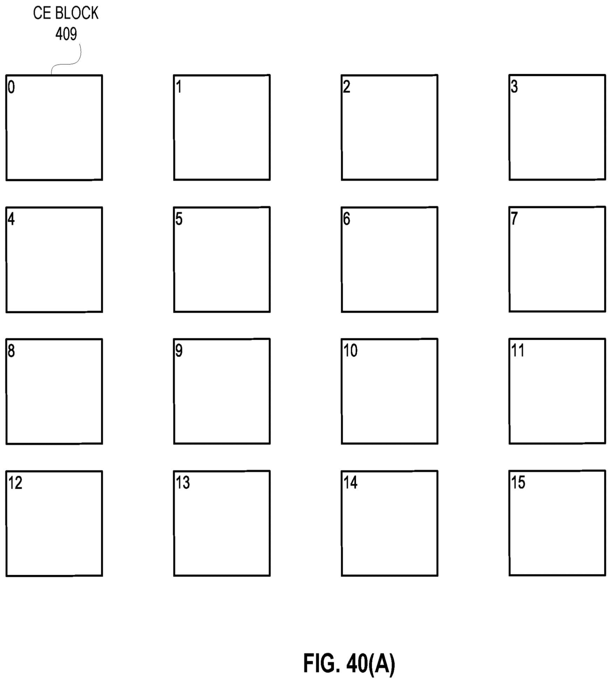

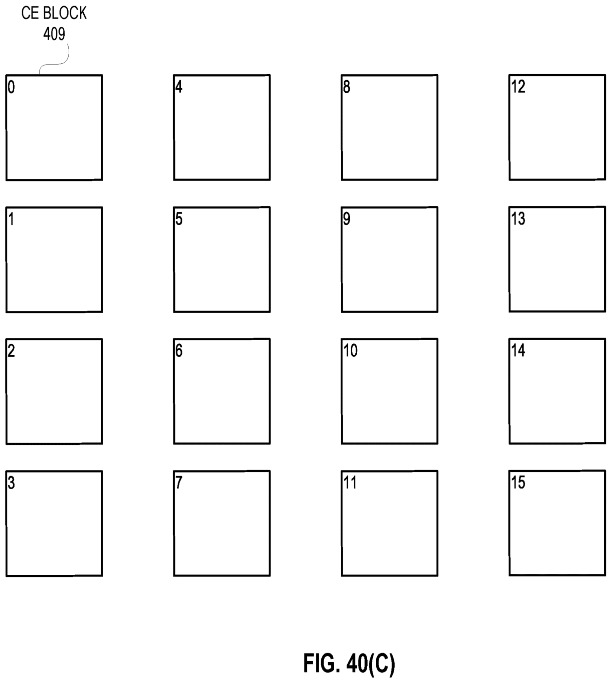

FIGS. 40(A)-(C) illustrate examples of pre-planned data movement for a transpose operation as executed in response to a shuffle instruction. FIG. 40(A) illustrates a plurality of interconnected CE blocks 409 with the original data position in the "matrix" shown in the upper left. FIG. 40(C) illustrates the plurality of interconnected CE blocks with the transposed data positions. In some examples, the plurality of connected CE blocks 409 are in a grid.

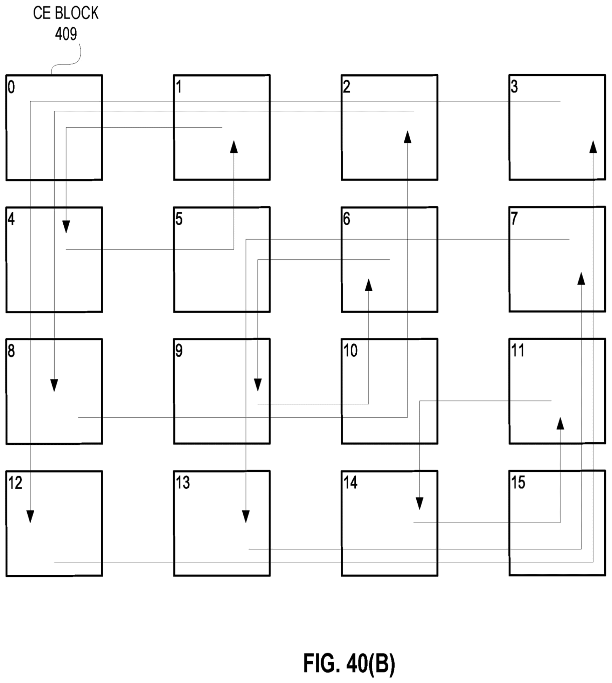

FIG. 40(B) illustrates data movement paths that the NOC performs to complete the transpose. In this example, assuming each movement is a cycle, the overall latency of the transpose is 6 cycles as the "3" moves around the edges to "12" and "12" moves to "3" as these are the longest data movements.

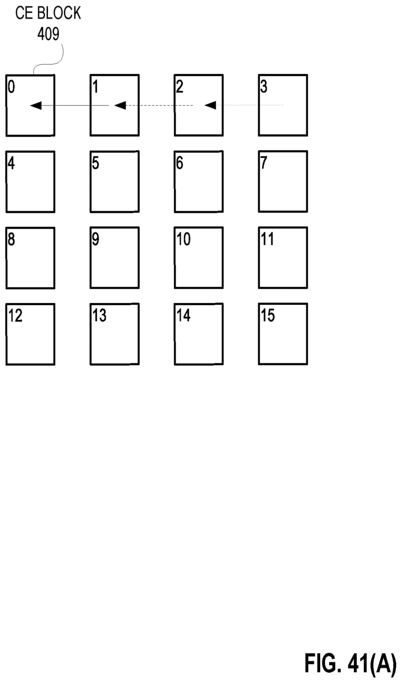

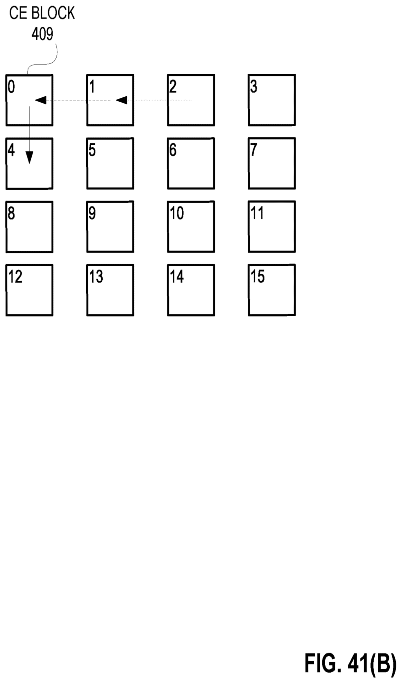

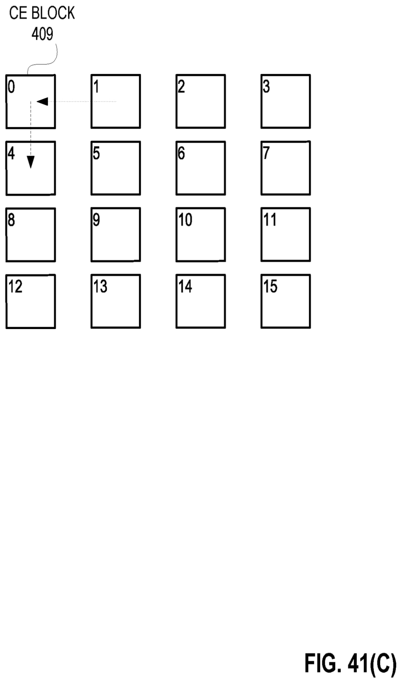

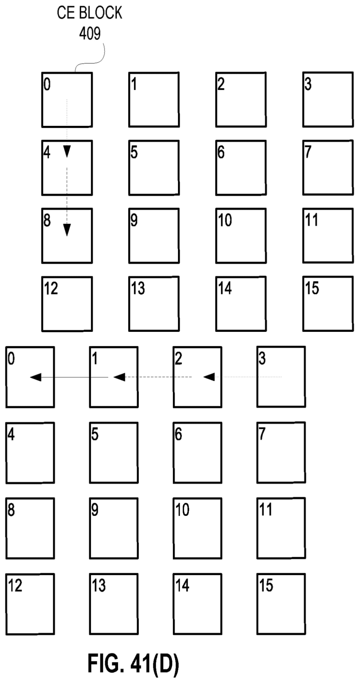

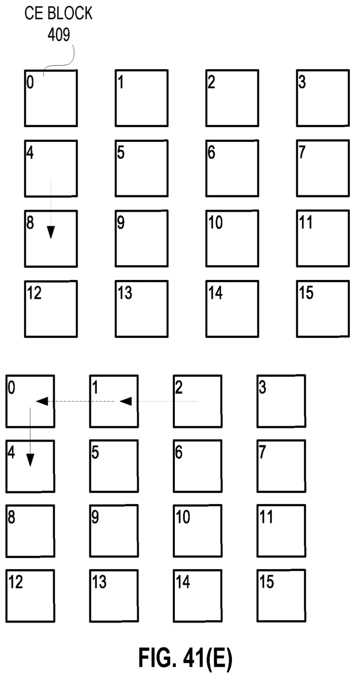

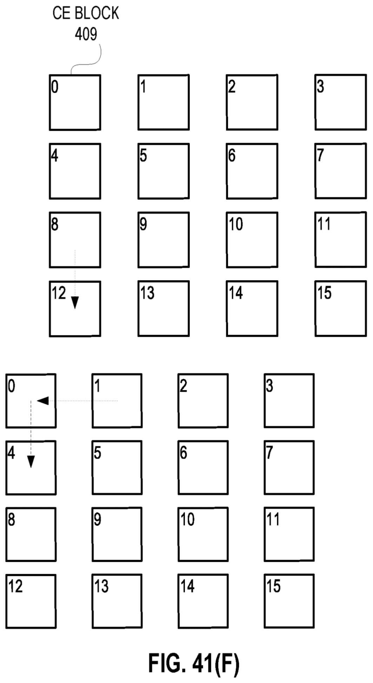

FIGS. 41(A)-(F) show hop by hop how the data moves across a mesh e.g., for the 3 to 12 path, the 2 to 8 path, and the 3 to 4 path. Since 2 to 8 follows 3 to 4 and 3 to 12 follows 2 to8, contention can be avoided and the data can move around the edge in the first 3 cycles. In cycle 3 after 3 to 4 has completed, and 2 to 8 turns the corner, a second transpose can be executed due to the lack of contention on the mesh as shown in the lower half of FIGS. 41(D)-(F). This concurrent transposition allows for a new transpose every 3 cycles (in these examples) despite a relatively high latency of 6 cycles to complete the longest data movement path.

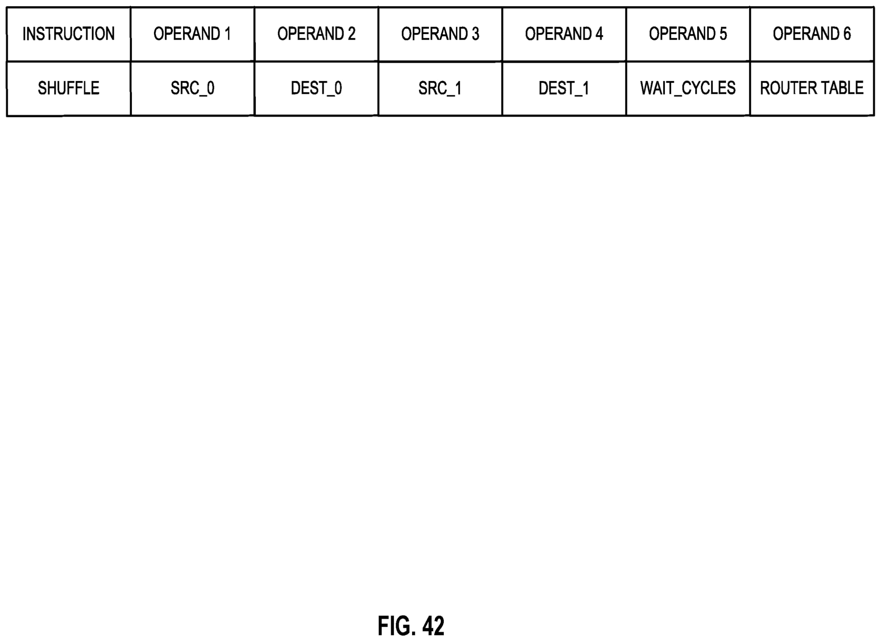

In some examples, data movement is accomplished by executing a shuffle instruction on one or more CE blocks. FIG. 42 illustrates examples of a shuffle instruction. In particular fields for a plurality of operands are illustrated. The shuffle instruction is a router move instruction and picks up two register file locations from the source tile (identified as SRC_0 and SRC_1) and sends the data to the destination tile's register addresses (DST_0 and DST_1) (as coded in the router table(s) 3807).

In some examples, the shuffle instruction has an operand for indicating the number of wait cycles for the CE block to wait (e.g., perform no operations) after the execution of a shuffle instruction to allow for contention free routing. The number of wait cycles are programmed into timer(s) 3809.

Note the shuffle instruction can be decoded, placed, and executed as described in FIG. 23.

Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

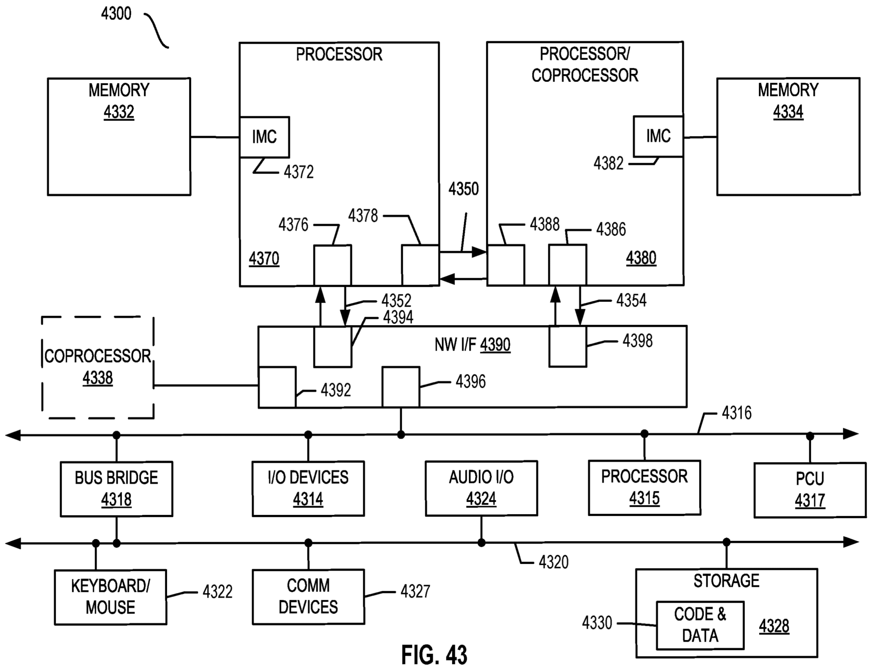

FIG. 43 illustrates an example computing system. Multiprocessor system 4300 is an interfaced system and includes a plurality of processors or cores including a first processor 4370 and a second processor 4380 coupled via an interface 4350 such as a point-to-point (P-P) interconnect, a fabric, and/or bus. In some examples, the first processor 4370 and the second processor 4380 are homogeneous. In some examples, first processor 4370 and the second processor 4380 are heterogenous. Though the example multiprocessor system 4300 is shown to have two processors, the system may have three or more processors, or may be a single processor system. In some examples, the computing system is a system on a chip (SoC).

Processors 4370 and 4380 are shown including integrated memory controller (IMC) circuitry 4372 and 4382, respectively. Processor 4370 also includes interface circuits 4376 and 4378; similarly, second processor 4380 includes interface circuits 4386 and 4388. Processors 4370, 4380 may exchange information via the interface 4350 using interface circuits 4378, 4388. IMCs 4372 and 4382 couple the processors 4370, 4380 to respective memories, namely a memory 4332 and a memory 4334, which may be portions of main memory locally attached to the respective processors.

Processors 4370, 4380 may each exchange information with a network interface (NW I/F) 4390 via individual interfaces 4352, 4354 using interface circuits 4376, 4394, 4386, 4398. The network interface 4390 (e.g., one or more of an interconnect, bus, and/or fabric, and in some examples is a chipset) may optionally exchange information with a co-processor 4338 via an interface circuit 4392. In some examples, the co-processor 4338 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 4370, 4380 or outside of both processors, yet connected with the processors via an interface such as P-P interconnect, such that either or both processors' local cache information may be stored in the shared cache if a processor is placed into a low power mode.

Network interface 4390 may be coupled to a first interface 4316 via interface circuit 4396. In some examples, first interface 4316 may be an interface such as a Peripheral Component Interconnect (PCI) interconnect, a PCI Express interconnect or another I/O interconnect. In some examples, first interface 4316 is coupled to a power control unit (PCU) 4317, which may include circuitry, software, and/or firmware to perform power management operations with regard to the processors 4370, 4380 and/or co-processor 4338. PCU 4317 provides control information to a voltage regulator (not shown) to cause the voltage regulator to generate the appropriate regulated voltage. PCU 4317 also provides control information to control the operating voltage generated. In various examples, PCU 4317 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 4317 is illustrated as being present as logic separate from the processor 4370 and/or processor 4380. In other cases, PCU 4317 may execute on a given one or more of cores (not shown) of processor 4370 or 4380. In some cases, PCU 4317 may be implemented as a microcontroller (dedicated or general-purpose) or other control logic configured to execute its own dedicated power management code, sometimes referred to as P-code. In yet other examples, power management operations to be performed by PCU 4317 may be implemented externally to a processor, such as by way of a separate power management integrated circuit (PMIC) or another component external to the processor. In yet other examples, power management operations to be performed by PCU 4317 may be implemented within BIOS or other system software.

Various I/O devices 4314 may be coupled to first interface 4316, along with a bus bridge 4318 which couples first interface 4316 to a second interface 4320. In some examples, one or more additional processor(s) 4315, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 4316. In some examples, second interface 4320 may be a low pin count (LPC) interface. Various devices may be coupled to second interface 4320 including, for example, a keyboard and/or mouse 4322, communication devices 4327 and storage circuitry 4328. Storage circuitry 4328 may be one or more non-transitory machine-readable storage media as described below, such as a disk drive or other mass storage device which may include instructions/code and data 4330 and may implement the storage 4303 in some examples. Further, an audio I/O 4324 may be coupled to second interface 4320. Note that other architectures than the point-to-point architecture described above are possible. For example, instead of the point-to-point architecture, a system such as multiprocessor system 4300 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

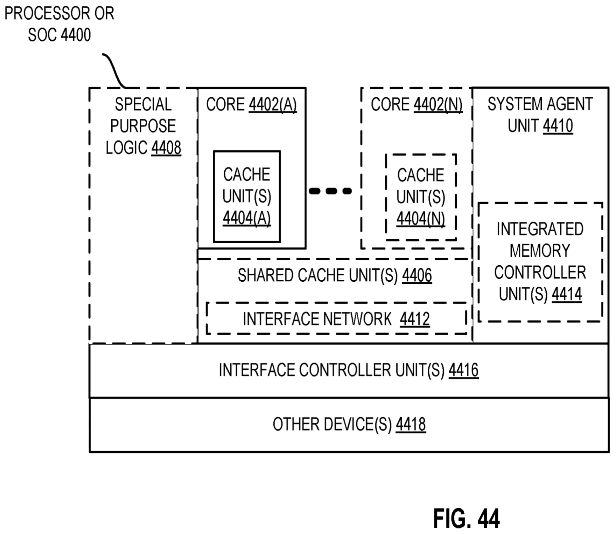

FIG. 44 illustrates a block diagram of an example processor and/or SoC 4400 that may have one or more cores and an integrated memory controller. The solid lined boxes illustrate a processor and/or SoC 4400 with a single core 4402(A), system agent unit circuitry 4410, and a set of one or more interface controller unit(s) circuitry 4416, while the optional addition of the dashed lined boxes illustrates an alternative processor and/or SoC 4400 with multiple cores 4402(A)-(N), a set of one or more integrated memory controller unit(s) circuitry 4414 in the system agent unit circuitry 4410, and special purpose logic 4408, as well as a set of one or more interface controller unit(s) circuitry 4416. Note that the processor and/or SoC 4400 may be one of the processors 4370 or 4380, or co-processor 4338 or 4315 of FIG. 43.

Thus, different implementations of the processor and/or SoC 4400 may include: 1) a CPU with the special purpose logic 4408 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 4402(A)-(N) being one or more general purpose cores (e.g., general purpose in-order cores, general purpose out-of-order cores, or a combination of the two); 2) a co-processor with the cores 4402(A)-(N) being a large number of special purpose cores intended primarily for graphics and/or scientific (throughput); and 3) a co-processor with the cores 4402(A)-(N) being a large number of general purpose in-order cores. Thus, the processor and/or SoC 4400 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 4400 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 4404(A)-(N) within the cores 4402(A)-(N), a set of one or more shared cache unit(s) circuitry 4406, and external memory (not shown) coupled to the set of integrated memory controller unit(s) circuitry 4414. The set of one or more shared cache unit(s) circuitry 4406 may include one or more mid-level caches, such as level 2 (L2), level 3 (L3), level 4 (L4), or other levels of cache, such as a last level cache (LLC), and/or combinations thereof. While in some examples interface network circuitry 4412 (e.g., a ring interconnect) interfaces the special purpose logic 4408 (e.g., integrated graphics logic), the set of shared cache unit(s) circuitry 4406, and the system agent unit circuitry 4410, alternative examples use any number of well-known techniques for interfacing such units. In some examples, coherency is maintained between one or more of the shared cache unit(s) circuitry 4406 and cores 4402(A)-(N). In some examples, interface controller unit(s) circuitry 4416 couple the cores 4402(A)-(N) to one or more other devices 4418 such as one or more I/O devices, storage, one or more communication devices (e.g., wireless networking, wired networking, etc.), etc.

In some examples, one or more of the cores 4402(A)-(N) are capable of multi-threading. The system agent unit circuitry 4410 includes those components coordinating and operating cores 4402(A)-(N). The system agent unit circuitry 4410 may include, for example, power control unit (PCU) circuitry and/or display unit circuitry (not shown). The PCU may be or may include logic and components needed for regulating the power state of the cores 4402(A)-(N) and/or the special purpose logic 4408 (e.g., integrated graphics logic). The display unit circuitry is for driving one or more externally connected displays.

The cores 4402(A)-(N) may be homogenous in terms of instruction set architecture (ISA). Alternatively, the cores 4402(A)-(N) may be heterogeneous in terms of ISA; that is, a subset of the cores 4402(A)-(N) may be capable of executing an ISA, while other cores may be capable of executing only a subset of that ISA or another ISA.

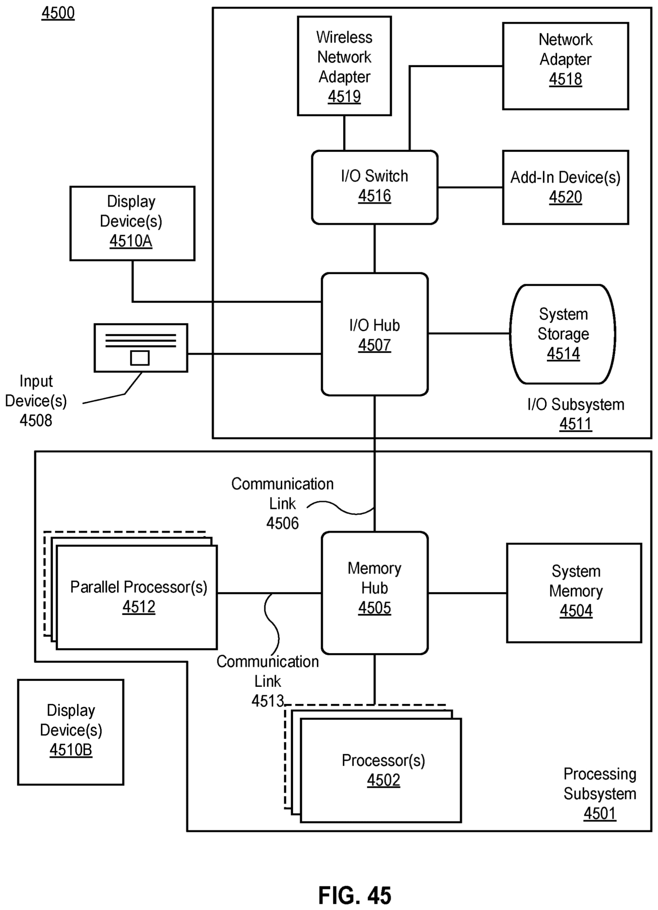

FIG. 45 is a block diagram illustrating a computing system 4500 configured to implement one or more aspects of the examples described herein. The computing system 4500 includes a processing subsystem 4501 having one or more processor(s) 4502 and a system memory 4504 communicating via an interconnection path that may include a memory hub 4505. The memory hub 4505 may be a separate component within a chipset component or may be integrated within the one or more processor(s) 4502. The memory hub 4505 couples with an I/O subsystem 4511 via a communication link 4506. The I/O subsystem 4511 includes an I/O hub 4507 that can enable the computing system 4500 to receive input from one or more input device(s) 4508. Additionally, the I/O hub 4507 can enable a display controller, which may be included in the one or more processor(s) 4502, to provide outputs to one or more display device(s) 4510A. In some examples the one or more display device(s) 4510A coupled with the I/O hub 4507 can include a local, internal, or embedded display device.

The processing subsystem 4501, for example, includes one or more parallel processor(s) 4512 coupled to memory hub 4505 via a bus or communication link 4513. The communication link 4513 may be one of any number of standards-based communication link technologies or protocols, such as, but not limited to PCI Express, or may be a vendor specific communications interface or communications fabric. The one or more parallel processor(s) 4512 may form a computationally focused parallel or vector processing system that can include a large number of processing cores and/or processing clusters, such as a many integrated core (MIC) processor. For example, the one or more parallel processor(s) 4512 form a graphics processing subsystem that can output pixels to one of the one or more display device(s) 4510A coupled via the I/O hub 4507. The one or more parallel processor(s) 4512 can also include a display controller and display interface (not shown) to enable a direct connection to one or more display device(s) 4510B.

Within the I/O subsystem 4511, a system storage unit 4514 can connect to the I/O hub 4507 to provide a storage mechanism for the computing system 4500. An I/O switch 4516 can be used to provide an interface mechanism to enable connections between the I/O hub 4507 and other components, such as a network adapter 4518 and/or wireless network adapter 4519 that may be integrated into the platform, and various other devices that can be added via one or more add-in device(s) 4520. The add-in device(s) 4520 may also include, for example, one or more external graphics processor devices, graphics cards, and/or compute accelerators. The network adapter 4518 can be an Ethernet adapter or another wired network adapter. The wireless network adapter 4519 can include one or more of a Wi-Fi, Bluetooth, near field communication (NFC), or other network device that includes one or more wireless radios.

The computing system 4500 can include other components not explicitly shown, including USB or other port connections, optical storage drives, video capture devices, and the like, which may also be connected to the I/O hub 4507. Communication paths interconnecting the various components in FIG. 45 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 4512 may incorporate circuitry optimized for graphics and video processing, including, for example, video output circuitry, and constitutes a graphics processing unit (GPU). Alternatively or additionally, the one or more parallel processor(s) 4512 can incorporate circuitry optimized for general purpose processing, while preserving the underlying computational architecture, described in greater detail herein. Components of the computing system 4500 may be integrated with one or more other system elements on a single integrated circuit. For example, the one or more parallel processor(s) 4512, memory hub 4505, processor(s) 4502, and I/O hub 4507 can be integrated into a system on chip (SoC) integrated circuit. Alternatively, the components of the computing system 4500 can be integrated into a single package to form a system in package (SIP) configuration. In some examples at least a portion of the components of the computing system 4500 can be integrated into a multi-chip module (MCM), which can be interconnected with other multi-chip modules into a modular computing system.

It will be appreciated that the computing system 4500 shown herein is illustrative and that variations and modifications are possible. The connection topology, including the number and arrangement of bridges, the number of processor(s) 4502, and the number of parallel processor(s) 4512, may be modified as desired. For instance, system memory 4504 can be connected to the processor(s) 4502 directly rather than through a bridge, while other devices communicate with system memory 4504 via the memory hub 4505 and the processor(s) 4502. In other alternative topologies, the parallel processor(s) 4512 are connected to the I/O hub 4507 or directly to one of the one or more processor(s) 4502, rather than to the memory hub 4505. In other examples, the I/O hub 4507 and memory hub 4505 may be integrated into a single chip. It is also possible that two or more sets of processor(s) 4502 are attached via multiple sockets, which can couple with two or more instances of the parallel processor(s) 4512.

Some of the particular components shown herein are optional and may not be included in all implementations of the computing system 4500. For example, any number of add-in cards or peripherals may be supported, or some components may be eliminated. Furthermore, some architectures may use different terminology for components similar to those illustrated in FIG. 45. For example, the memory hub 4505 may be referred to as a Northbridge in some architectures, while the I/O hub 4507 may be referred to as a Southbridge.

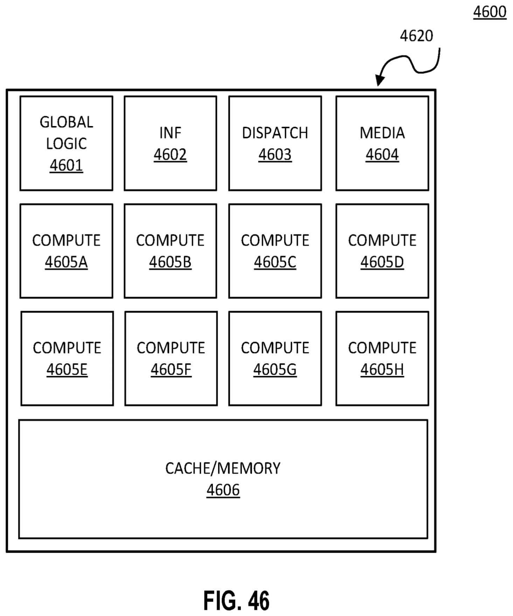

FIG. 46 shows a parallel compute system 4600, according to some examples. In some examples the parallel compute system 4600 includes a parallel processor 4620, which can be a graphics processor or compute accelerator as described herein. The parallel processor 4620 includes a global logic unit 4601, an interface 4602, a thread dispatcher 4603, a media unit 4604, a set of compute units 4605A-4605H, and a cache/memory units 4606. The global logic unit 4601, in some examples, includes global functionality for the parallel processor 4620, including device configuration registers, global schedulers, power management logic, and the like. The interface 4602 can include a front-end interface for the parallel processor 4620. The thread dispatcher 4603 can receive workloads from the interface 4602 and dispatch threads for the workload to the compute units 4605A-4605H. If the workload includes any media operations, at least a portion of those operations can be performed by the media unit 4604. The media unit can also offload some operations to the compute units 4605A-4605H. The cache/memory units 4606 can include cache memory (e.g., L3 cache) and local memory (e.g., HBM, GDDR) for the parallel processor 4620. Compute units 4605 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

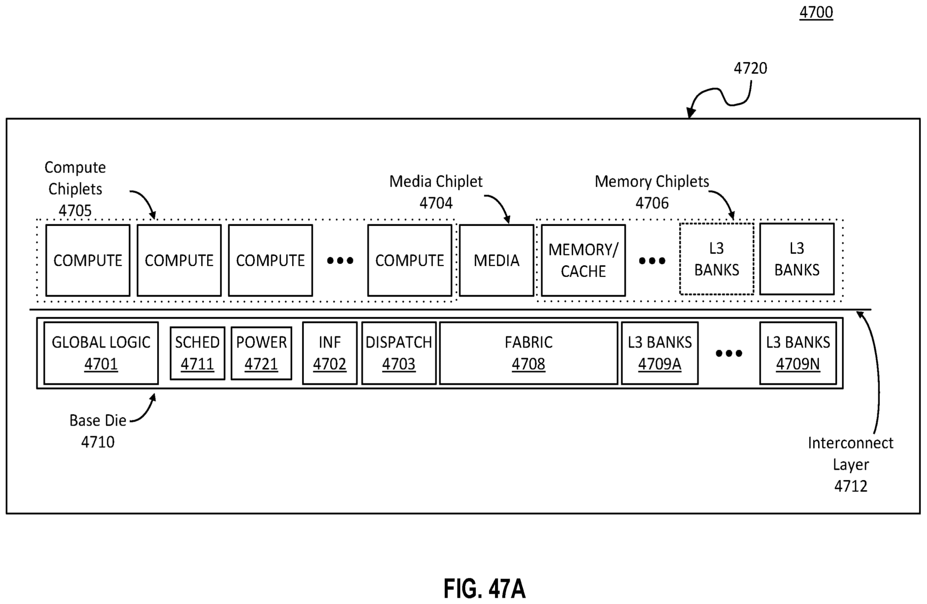

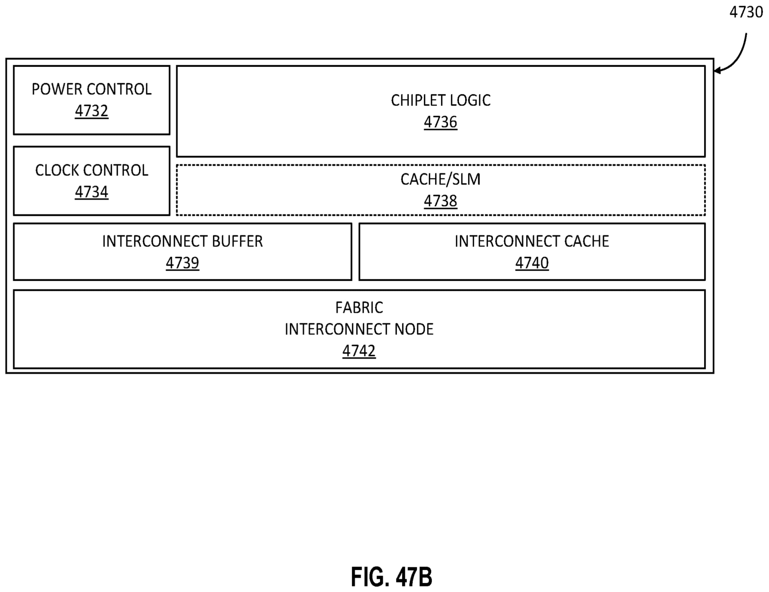

FIGS. 47A-47B illustrate a hybrid logical/physical view of a disaggregated parallel processor, according to examples described herein. FIG. 47A illustrates a disaggregated parallel compute system 4700. FIG. 47B illustrates a chiplet 4730 of the disaggregated parallel compute system 4700.

As shown in FIG. 47A, a disaggregated parallel compute system 4700 can include a parallel processor 4720 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 4705, a media chiplet 4704, and memory chiplets 4706. Each chiplet can be separately manufactured using different process technologies. For example, compute chiplets 4705 may be manufactured using the smallest or most advanced process technology available at the time of fabrication, while memory chiplets 4706 or other chiplets (e.g., I/O, networking, etc.) may be manufactured using a larger or less advanced process technologies.

The various chiplets can be bonded to a base die 4710 and configured to communicate with each other and logic within the base die 4710 via an interconnect layer 4712. In some examples, the base die 4710 can include global logic 4701, which can include scheduler 4711 and power management 4721 logic units, an interface 4702, a dispatch unit 4703, and an interconnect fabric 4708 coupled with or integrated with one or more L3 cache banks 4709A-4709N. The interconnect fabric 4708 can be an inter-chiplet fabric that is integrated into the base die 4710. Logic chiplets can use the fabric 4708 to relay messages between the various chiplets. Additionally, L3 cache banks 4709A-4709N in the base die and/or L3 cache banks within the memory chiplets 4706 can cache data read from and transmitted to DRAM chiplets within the memory chiplets 4706 and to system memory of a host.

In some examples the global logic 4701 is a microcontroller that can execute firmware to perform scheduler 4711 and power management 4721 functionality for the parallel processor 4720. The microcontroller that executes the global logic can be tailored for the target use case of the parallel processor 4720. The scheduler 4711 can perform global scheduling operations for the parallel processor 4720. The power management 4721 functionality can be used to enable or disable individual chiplets within the parallel processor when those chiplets are not in use.

The various chiplets of the parallel processor 4720 can be designed to perform specific functionality that, in existing designs, would be integrated into a single die. A set of compute chiplets 4705 can include clusters of compute units (e.g., execution units, streaming multiprocessors, etc.) that include programmable logic to execute compute or graphics shader instructions. A media chiplet 4704 can include hardware logic to accelerate media encode and decode operations. Memory chiplets 4706 can include volatile memory (e.g., DRAM) and one or more SRAM cache memory banks (e.g., L3 banks).

As shown in FIG. 47B, each chiplet 4730 can include common components and application specific components. Chiplet logic 4736 within the chiplet 4730 can include the specific components of the chiplet, such as an array of streaming multiprocessors, compute units, or execution units described herein. The chiplet logic 4736 can couple with an optional cache or shared local memory 4738 or can include a cache or shared local memory within the chiplet logic 4736. The chiplet 4730 can include a fabric interconnect node 4742 that receives commands via the inter-chiplet fabric. Commands and data received via the fabric interconnect node 4742 can be stored temporarily within an interconnect buffer 4739. Data transmitted to and received from the fabric interconnect node 4742 can be stored in an interconnect cache 4740. Power control 4732 and clock control 4734 logic can also be included within the chiplet. The power control 4732 and clock control 4734 logic can receive configuration commands via the fabric can configure dynamic voltage and frequency scaling for the chiplet 4730. In some examples, each chiplet can have an independent clock domain and power domain and can be clock gated and power gated independently of other chiplets.

At least a portion of the components within the illustrated chiplet 4730 can also be included within logic embedded within the base die 4710 of FIG. 47A. For example, logic within the base die that communicates with the fabric can include a version of the fabric interconnect node 4742. Base die logic that can be independently clock or power gated can include a version of the power control 4732 and/or clock control 4734 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

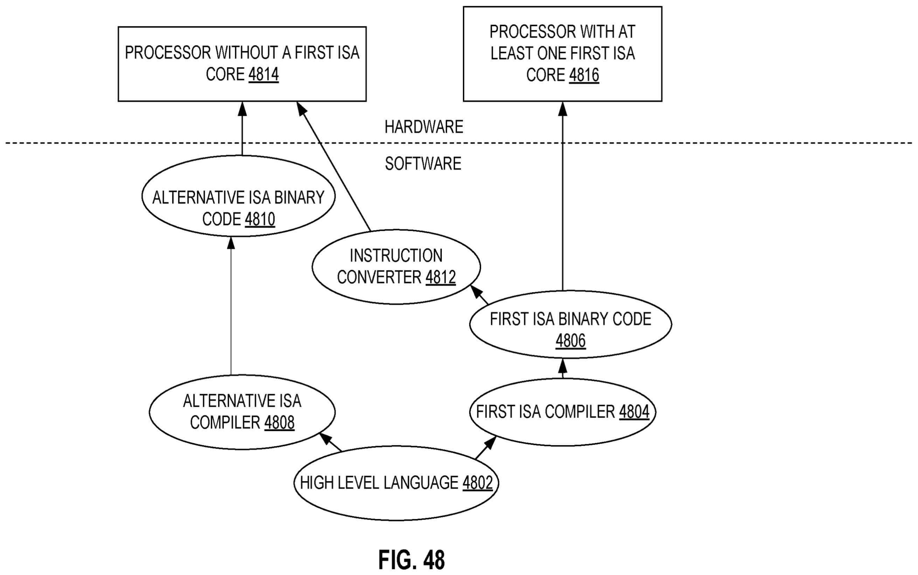

FIG. 48 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 48 shows a program in a high-level language 4802 may be compiled using a first ISA compiler 4804 to generate first ISA binary code 4806 that may be natively executed by a processor with at least one first ISA core 4816. The processor with at least one first ISA core 4816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 4804 represents a compiler that is operable to generate first ISA binary code 4806 (e.g., object code) that can, with or without additional linkage processing, be executed on the processor with at least one first ISA core 4816. Similarly, FIG. 48 shows the program in the high-level language 4802 may be compiled using an alternative ISA compiler 4808 to generate alternative ISA binary code 4810 that may be natively executed by a processor without a first ISA core 4814. The instruction converter 4812 is used to convert the first ISA binary code 4806 into code that may be natively executed by the processor without a first ISA core 4814. This converted code is not necessarily to be the same as the alternative ISA binary code 4810; however, the converted code will accomplish the general operation and be made up of instructions from the alternative ISA. Thus, the instruction converter 4812 represents software, firmware, hardware, or a combination thereof that, through emulation, simulation or any other process, allows a processor or other electronic device that does not have a first ISA processor or core to execute the first ISA binary code 4806.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

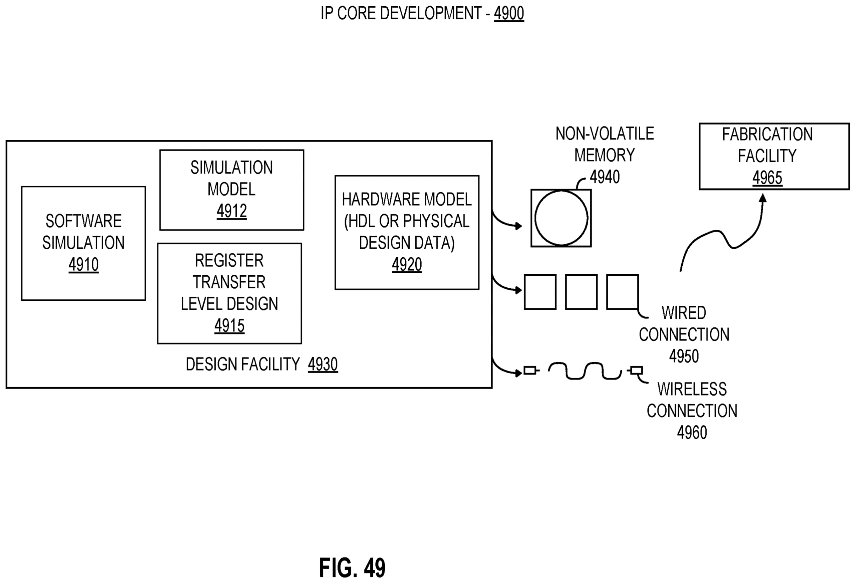

FIG. 49 is a block diagram illustrating an IP core development system 4900 that may be used to manufacture an integrated circuit to perform operations according to some examples. The IP core development system 4900 may be used to generate modular, re-usable designs that can be incorporated into a larger design or used to construct an entire integrated circuit (e.g., an SOC integrated circuit). A design facility 4930 can generate a software simulation 4910 of an IP core design in a high-level programming language (e.g., C/C++). The software simulation 4910 can be used to design, test, and verify the behavior of the IP core using a simulation model 4912. The simulation model 4912 may include functional, behavioral, and/or timing simulations. A register transfer level (RTL) design 4915 can then be created or synthesized from the simulation model 4912. The RTL design 4915 is an abstraction of the behavior of the integrated circuit that models the flow of digital signals between hardware registers, including the associated logic performed using the modeled digital signals. In addition to an RTL design 4915, lower-level designs at the logic level or transistor level may also be created, designed, or synthesized. Thus, the particular details of the initial design and simulation may vary.

The RTL design 4915 or equivalent may be further synthesized by the design facility into a hardware model 4920, which may be in a hardware description language (HDL), or some other representation of physical design data. The HDL may be further simulated or tested to verify the IP core design. The IP core design can be stored for delivery to a fabrication facility 4965 using non-volatile memory 4940 (e.g., hard disk, flash memory, or any non-volatile storage medium). Alternatively, the IP core design may be transmitted (e.g., via the Internet) over a wired connection 4950 or wireless connection 4960. The fabrication facility 4965 may then fabricate an integrated circuit that is based at least in part on the IP core design. The fabricated integrated circuit can be configured to perform operations in accordance with at least some examples described herein.

### ENCRYPTION COMPUTE APPARATUS AND METHOD WITH COMPUTE GRID PARTITIONING AND RECONFIGURATION

In accordance with embodiments of the invention, a Fully Homomorphic Encryption (FHE) accelerator includes a compute engine comprising an *n* x *n* grid of compute tiles which collaborate to complete large compute tasks. Each compute tile may include execution circuitry to execute instructions and process data indicated by operands of the instructions. To reduce instruction movement overhead, instructions may be broadcast across compute tiles so different compute tiles execute the same instructions. However, some instructions must exhibit varied behavior for some tasks.

In some implementations, each compute tile is assigned or otherwise associated with a unique tile identifier (ID) which is used to uniquely identify the compute tile within the compute engine and to interpret generic instructions to implement tile specific behaviors. Embodiments of the invention include circuitry for dynamically reconfiguring tile-IDs to provide dramatic performance benefits in some implementations. For example, one embodiment includes a load-ID instruction that loads tile-IDs stored in a memory (e.g., a scratchpad (SPAD) memory) and writes them into respective tile-ID registers of the compute tiles. The load-ID instruction may be an example of a data move instruction, such as those previously described.

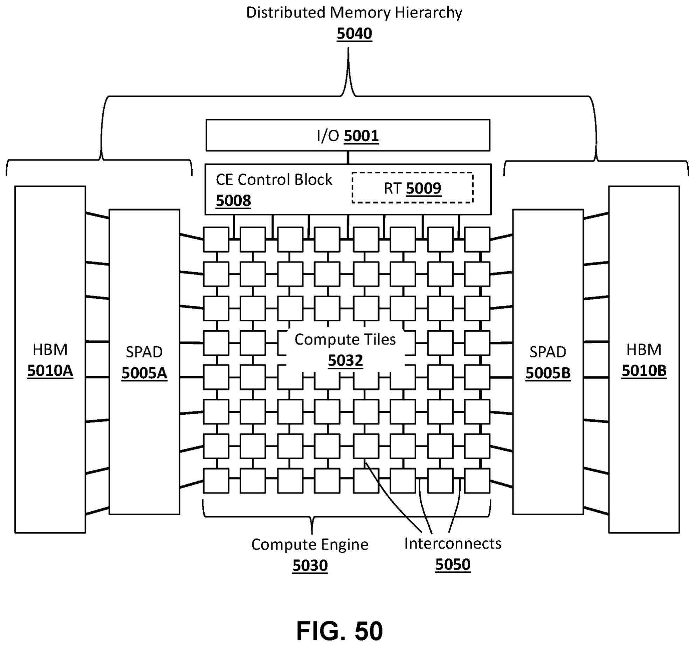

FIG. 50 illustrates an example Fully Homomorphic Encryption (FHE) accelerator architecture on which embodiments of the invention may be implemented. A compute engine 5030 includes an *n* x *n* grid of compute tiles 5032 interconnected to one another and to a distributed memory subsystem 5040 over a plurality of interconnects 5050. The distributed memory subsystem 5040 may include one or more scratchpad memory devices 5005A-B (e.g., operating as a cache or local memory) and one or more system memory devices such as high-bandwidth memory (HBM) devices 5010A-B. The scratch pad memory devices 5005A-B are distributed to maximize compute density while continuing to support efficient data movement.

A compute engine control block (CCB) 5008 dispatches instructions and handles synchronization of data stored in the HBM 5010A-B and scratchpad memories 5005A-B. By way of example, memory loads and stores may be tracked in the CCB 5008 and dispatched across the scratchpad memories 5005A-B for coordinated data fetch operations. As previously described, the loads and stores may be processed locally, at least in part, in the scratchpad memories 5005A-B and written into the scratchpad memories and/or HBM 5010A-B.

The compute engine control block 5008 may also generate and maintain a routing table 5009 which indicates routes to each of the compute tiles 5032 for data movement. In some implementations, the routing table 5009 may be updated to partition the compute tiles 5032 into groups, where each group of compute tiles is to collectively perform a separate operation scheduled by the compute engine control block in accordance with assigned tile IDs.

In some examples, the CCB 5008 includes an instruction decoder to decode the instructions to be executed by the compute tiles 5032. For example, the decoder may decode a given macro-instruction into one or more microinstructions/ microoperations, which are distributed over the interconnects 5050 to the compute tiles 5032. Alternatively, or additionally, a decoder of a host processor (see, e.g., host processor 401 in FIG. 4) decodes the instructions to be executed by the compute engine 5030.

Input/output (I/O) circuitry 5001 provides connectivity to a host computing system or other types of devices, including additional memory/storage devices, in accordance with specified I/O protocols. In some embodiments, the I/O circuitry supports Compute Express Link (CXL) communication channels (e.g., CXL.io, CXL.mem, CXL.cache) to couple the compute engine 5030 to external devices such as external memory, cache and storage devices.

The illustrated embodiment includes an 8 x 8 grid of compute tiles 5032 which collectively form the compute engine 5030. When computing an operation, such as an NTT operation as previously described, each compute tile performs similar but distinct operations. For example, the compute tiles or a subset thereof may execute the same instruction in parallel. In these embodiments, the unique tile-ID of each compute tile can be used to generate twiddle factors and differentiate the work done by each respective compute tile. While these tile-IDs may be hard-coded to minimize circuit area, hard-coded tile-IDs can make reconfiguring the compute engine 5030 more challenging.

Embodiments of the invention include circuitry and techniques for reconfiguring of all or a subset of the compute tiles 5030 to support different parameter sets (smaller polynomials for example), frameworks such as Fast Fully Homomorphic Encryption over the Torus (TFHE), and batching NTT, to realize significant performance improvements. In particular, these embodiments include circuitry to decode and execute a load-ID instruction to take previously computed tile-IDs stored in memory (e.g., stored in scratchpad 5005A-B) and write them into the local tile-ID registers maintained in each compute tile.

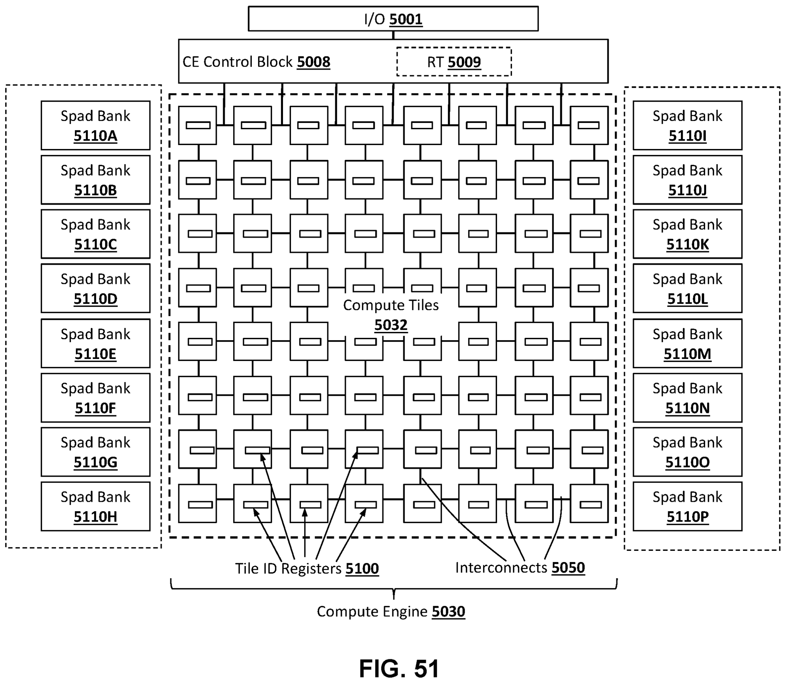

FIG. 51 illustrates an implementation in which each compute tile 5032 includes a tile ID register 5100 to store a corresponding tile-ID value which uniquely identifies the corresponding tile. In this implementation, a plurality of tile-ID values may be loaded from one or more scratchpad units 5110A-P and stored in a corresponding one or more tile ID registers 5100 in response to executing one or more of the load-ID instructions.

In some embodiments, a separate instance of the load-ID instruction is dispatched from the compute engine (CE) control block 5008 to each respective compute tile. Each compute tile executes its instance of the load-ID instruction to load a corresponding tile-ID from scratchpad memory 5110A-P into its tile-ID register. Alternatively, or additionally, the load-ID instruction may be executed by one compute tile for a plurality of other compute tiles (e.g., configured in a group of compute tiles executing a common instruction sequence) or may be executed by an external processor (e.g., a host processor) to control the compute engine 5030 and cause the tile-ID values to be loaded to tile ID registers (e.g., within a configuration space visible to the host processor).

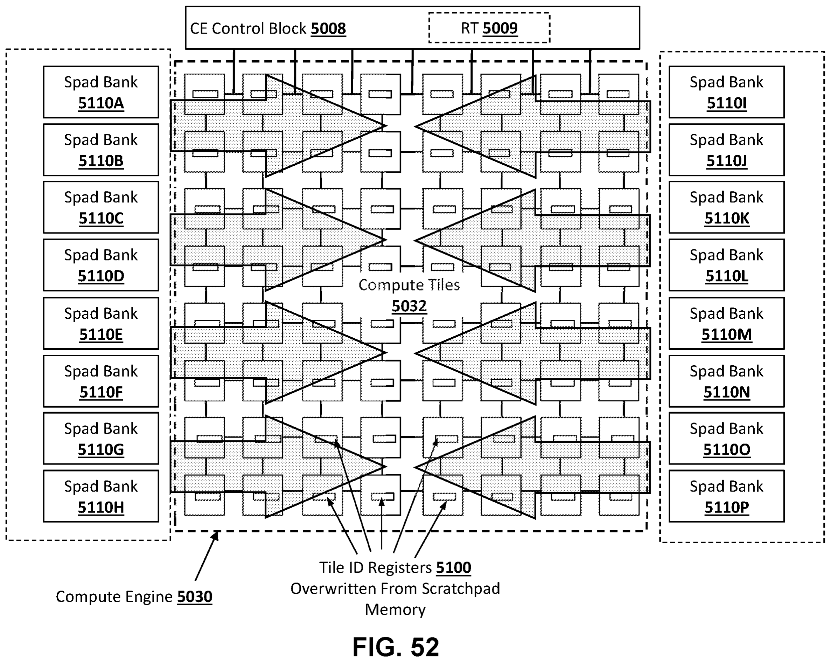

Regardless of where the load-ID instruction is executed, FIG. 52 illustrates old tile-ID values stored in the tile-ID registers being overwritten in response to execution of a load-ID instruction. The tile-ID values stored in the scratchpad memory 5110A-P are loaded and written to the corresponding tile-ID registers 5100 in the compute tiles 5032 to reconfigure the compute tiles 5032. The illustrated compute engine grid comprises an 8x8 grid of compute tiles 5032 and 16 scratchpad banks 5110A-P. Each compute tile includes a tile-ID register 5200 to store current tile-ID values. A load-ID instruction may be executed (e.g., on a write to the scratchpad banks 5110A-P) which moves updated tile-ID values from the scratchpad banks 5110A-P into each tile in the 8x8 grid. In some embodiments, even though the scratchpad memory is partitioned into banks, each compute tile 5032 can access any of the scratchpad banks 5110A-P.

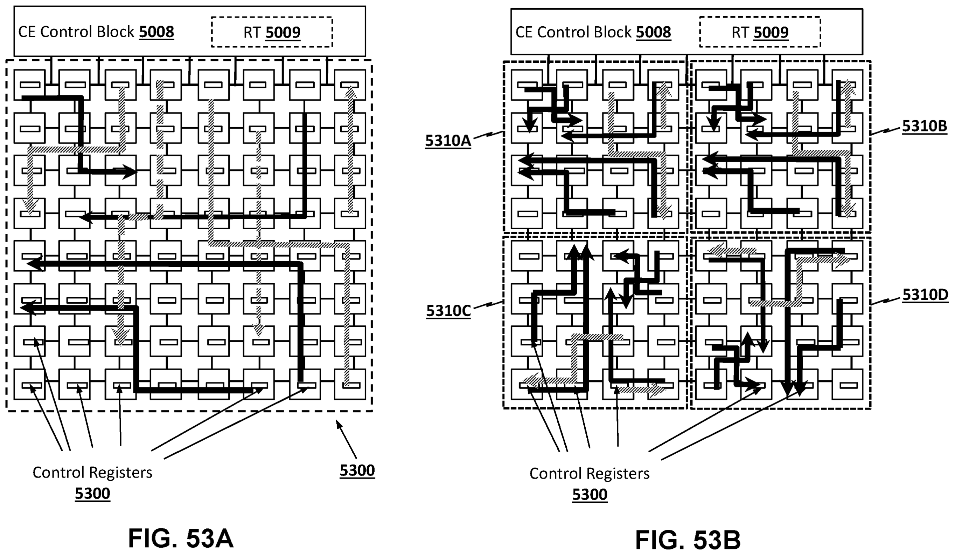

The ability to reconfigure tile-ID values of compute tiles 5032 dramatically expands the flexibility of the compute engine 5030. FIGS. 53A-B show two compute engine configurations optimized for different types of workloads. The compute engine 5300 of FIG. 53A is configured as a monolithic compute engine in which all 8x 8 compute tiles operate collectively to perform the same operation (e.g., a single NTT operation). This monolithic configuration minimizes the instruction execution latency. However, shuffle operations must move data over the interconnects 5050 across the full 8 x 8 grid, thereby limiting NTT throughput.

In contrast, the configuration in FIG. 53B partitions the 8 x 8 grid of compute units into four 4 x 4 grids 5310A-D to allow the simultaneous executions of four operations, such as four NTTs (e.g., with a batch size of 4). Although this configuration may increase latency, it dramatically improves throughput (e.g., by 2.5x), which translates directly to workload performance for many types of workloads.

In some embodiments, each compute tile 5032 includes one or more control registers 5300 to store configuration parameters indicating the compute tile partitioning for a current operation or sequence of operations. In FIG. 53B, for example, partition identifiers may be stored in control registers 5300 to indicate partition to which each respective compute tile is assigned. In some embodiments, the control registers include the tile ID registers 5100 described above. In these implementations, the tile-IDs stored in the tile-ID registers 5100 may be used for partitioning of compute tiles 5032. For example, one or more bits encoded in each tile-ID may indicate the partition of the corresponding compute tile (e.g., the n most significant bits of the tile-ID). In some implementations, the compute engine control block 5008 or an external/host processor may maintain a mapping of compute tiles to partitions. For example, the mapping may be specified in the routing table 5009 or in a separate mapping table maintained in memory or implemented in circuitry of the CE control block 5008.

In the configuration shown in FIG. 53A, all compute tiles in the monolithic 8 x 8 configuration may be assigned to the same partition identifier (e.g., 0 to indicate no partitioning). In contrast, in the partitioned configuration in FIG. 53B, control registers of compute tiles in grid 5310A store an indication of a first partition (e.g., partition 1), control registers of compute tiles in grid 5310B store an indication of a second partition (e.g., partition 2), control registers of the compute tiles in grid 5310C store an indication of a third partition (e.g., partition 3), and control registers of the compute tiles in grid 5310D store an indication of a fourth partition (e.g., partition 4).

In some embodiments, the control registers 5300 (including the tile-ID registers) are updated in response to a configuration operation. For example, each compute tile may execute a separate instance of a configuration instruction (following decoding and dispatching by the CE control block 5008) to cause configuration values to be read from the scratchpad banks 5110A-P and loaded to each respective configuration register (e.g., as described above with respect to tile-ID registers). The control registers may also be written by an external processor (e.g., a host processor) executing program code such as an application which offloads tasks to the compute engine 5030. Alternatively, or additionally, the compute engine control block 5008 may write to the control registers (e.g., in response to a configuration command).

In some embodiments, each compute tile has a corresponding physical tile identifier which is mapped to a corresponding tile-ID value (a logical tile identifier). Thus, when tile-ID values are loaded into tile-ID registers of the compute tiles a logical-to-physical mapping is performed. This mapping may be maintained in a table (e.g., routing table 3807) or other data structure or location in memory. In one implementation, each physical tile identifier may be used as an index to the data structure or to a specific memory location where the corresponding tile-ID value is stored.

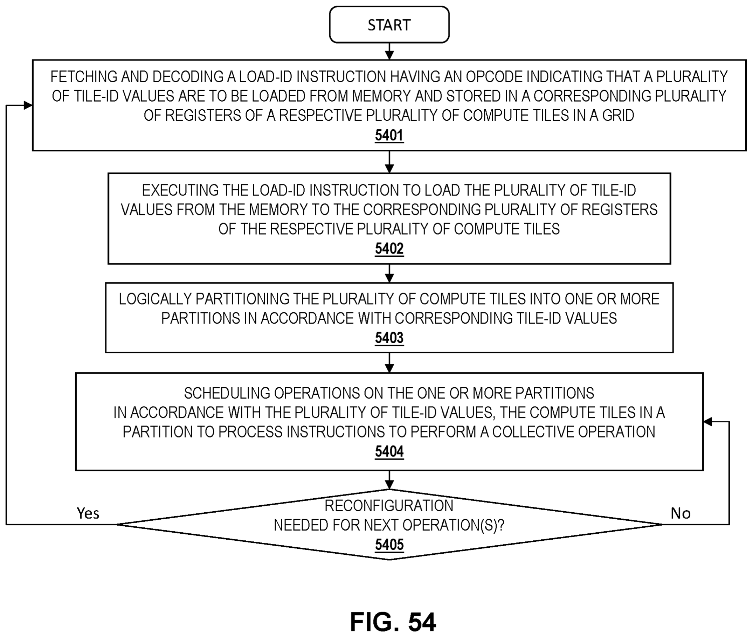

A method in accordance with some embodiments is illustrated in FIG. 54. The method may be implemented on the various architectures descried herein but is not limited to any processor or system architectures.

At 5401, a load-ID instruction is fetched and decoded, the load-ID instruction having an opcode indicating that a plurality of tile-ID values are to be loaded from memory (e.g., the scratchpad banks 5110A-P) and stored in a corresponding plurality of registers of a respective plurality of compute tiles in a grid (e.g., control registers such as the tile-ID registers described above).

At 5402, the load-ID instruction is executed to load the plurality of tile-ID values from the memory to the corresponding plurality of registers. The memory location corresponding to a tile-ID value may be determined from fields encoded in the corresponding load-ID instruction. For example, each instance of the tile-ID instruction may include an address or an address offset of a corresponding tile-ID value. For example, the address offset may be combined with a base address to determine a memory location for the corresponding tile-ID value. Alternatively, the tile-ID instruction may indicate a register or memory location in which the address or address offset is stored.

At 5403, the plurality of compute tiles are logically partitioned into one or more partitions in accordance with corresponding tile-ID values. For example, a mapping may be generated and stored in a table or other data structure in memory which maps each compute tile to one of a plurality of partitions. The mapping may specify ranges of compute tiles and/or individual compute tiles associated with each partition.

At 5404, operations are scheduled on the one or more partitions in accordance with the plurality of tile-ID values. For example, the group of compute tiles associated with a partition may collectively execute instructions (e.g., uops) to perform a specified operation (e.g., an NTT operation).

If a reconfiguration of compute tiles is needed for a subsequent operation, determined at 5405, then the process returns to 5401 (fetching and decoding a new load-ID instruction). If not, then at 5404 additional operations are scheduled on the one or more partitions in accordance with the plurality of tile-ID values.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

### EXAMPLES

The following are example implementations of different embodiments of the invention.

Example 1. An apparatus comprising: a plurality of compute tiles coupled to an interconnect network; a compute tile control circuit coupled to the plurality of compute tiles over the interconnect network, the compute tile control circuit to dispatch an instruction for execution by the plurality of compute tiles; the plurality of compute tiles to execute a corresponding plurality of instances of the instruction to associate the plurality of compute tiles with a corresponding plurality of tile identifiers (IDs), each compute tile to be associated with one of the tile IDs; and the compute tile control circuitry to schedule an operation to be executed collectively by a group of the compute tiles, the group of compute tiles to be indicated, at least in part, based on the tile IDs.

Example 2. The apparatus of example 1, wherein each compute tile includes a control register in which to load a corresponding tile ID of the plurality of tile IDs from a memory responsive to execution of a respective instance of the instruction.

Example 3. The apparatus of examples 1 or 2, wherein the group of compute tiles comprises a portion of the plurality of compute tiles defined based on the plurality of tile IDs, the portion comprising one half, one quarter, one eighth, or one sixteenth of the plurality of compute tiles.

Example 4. The apparatus of any of examples 1-3, wherein the group of compute tiles comprises a first group of compute tiles and the operation to be executed comprises a first operation, wherein the compute tile control circuit is to specify a plurality of additional operations to be executed in parallel by a corresponding plurality of additional groups of compute tiles defined in accordance with the tile IDs.

Example 5. The apparatus of any of examples 1-4, wherein the compute tile control circuit is to maintain a routing table to associate each compute tile with one of the plurality of additional groups or with the first group of compute tiles.

Example 6. The apparatus of any of examples 1-5, wherein the plurality of compute tiles comprise a two dimensional grid of compute tiles, each compute tile in the two dimensional grid coupled to the memory and/or to a subset of other compute tiles over the interconnect network.

Example 7. The apparatus of any of examples 1-6, wherein the compute tile control circuit is to route instructions corresponding to the first operation over the interconnect network to the first group of compute tiles in accordance with the routing table.

Example 8. The apparatus of any of examples 1-7, wherein the plurality of instances of the instruction comprise a corresponding plurality of microoperations, the compute tile control circuit further comprising: instruction fetch circuitry to fetch a macroinstruction; and decode circuitry to decode the macroinstruction to generate the corresponding plurality of microoperations.

Example 9.The apparatus of any of examples 1-8, wherein the memory comprises a scratchpad memory or cache coupled to the plurality of compute tiles.

Example 10. A method, comprising: dispatching, by a compute tile control circuit, an instruction for execution by a plurality of compute tiles coupled to an interconnect network; executing, by the plurality of compute tiles, a corresponding plurality of instances of the instruction to associate the plurality of compute tiles with a corresponding plurality of tile identifiers (IDs), each compute tile to be associated with one of the tile IDs; and scheduling, by the compute tile control circuit, an operation to be executed collectively by a group of the compute tiles, the group of compute tiles to be indicated, at least in part, based on the tile IDs.

Example 11. The method of example 10, wherein each compute tile includes a control register in which to load a corresponding tile ID of the plurality of tile IDs from a memory responsive to execution of a corresponding instance of the instruction.

Example 12. The method of examples 9 or 10, wherein the group of compute tiles comprises a portion of the plurality of compute tiles defined based on the plurality of tile IDs, the portion comprising one half, one quarter, one eighth, or one sixteenth of the plurality of compute tiles.

Example 13. The method of any of examples10-12, wherein the group of compute tiles comprises a first group of compute tiles and the operation to be executed comprises a first operation, wherein the compute tile control circuit is to specify a plurality of additional operations to be executed in parallel by a corresponding plurality of additional groups of compute tiles defined in accordance with respective tile IDs.

Example 14. The method of any of examples 10-13, further comprising: maintaining, by the compute tile control circuit, a routing table to associate each compute tile with one of the plurality of additional groups or with the first group of compute tiles.

Example 15. The method of any of examples 10-14, wherein the plurality of compute tiles comprise a two dimensional grid of compute tiles, each compute tile in the two dimensional grid coupled to the memory and/or to a subset of other compute tiles over the interconnect network.

Example 16. The method of any of examples 10-15, further comprising: routing instructions corresponding to the first operation over the interconnect network to the first group of compute tiles in accordance with the routing table.

Example 17. The method of any of examples 10-16, wherein the plurality of instances of the instruction comprise a corresponding plurality of microoperations, the method further comprising: fetching, by instruction fetch circuitry of the compute tile control circuit, a macroinstruction; and decoding the macroinstruction by decode circuitry of the compute tile control circuit to generate the corresponding plurality of microoperations.

Example 18. The method of any of examples 10-17, wherein the memory comprises a scratchpad memory or cache coupled to the plurality of compute tiles.

Example 19. A machine-readable medium having program code stored thereon which, when executed by a machine, causes the machine to perform operations, comprising: dispatching, by a compute tile control circuit, an instruction for execution by a plurality of compute tiles coupled to an interconnect network; executing, by the plurality of compute tiles, a corresponding plurality of instances of the instruction to associate the plurality of compute tiles with a corresponding plurality of tile identifiers (IDs), each compute tile to be associated with one of the tile IDs; and scheduling, by the compute tile control circuit, an operation to be executed collectively by a group of the compute tiles, the group of compute tiles to be indicated, at least in part, based on the tile IDs.

Example 20. The machine-readable medium of example 19, wherein each compute tile includes a control register in which to load a corresponding tile ID of the plurality of tile IDs from a memory responsive to execution of a corresponding instance of the instruction.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow

## Claims

1. An apparatus comprising:
a plurality of compute tiles coupled to an interconnect network;
a compute tile control circuit coupled to the plurality of compute tiles over the interconnect network, the compute tile control circuit to dispatch an instruction for execution by the plurality of compute tiles;
the plurality of compute tiles to execute a corresponding plurality of instances of the instruction to associate the plurality of compute tiles with a corresponding plurality of tile identifiers (IDs), each compute tile to be associated with one of the tile IDs; and
the compute tile control circuitry to schedule an operation to be executed collectively by a group of the compute tiles, the group of compute tiles to be indicated, at least in part, based on the plurality of tile IDs.

2. The apparatus of claim 1, wherein each compute tile includes a control register in which to load a corresponding tile ID of the plurality of tile IDs from a memory responsive to execution of a respective instance of the instruction.

3. The apparatus of claims 1 or 2, wherein the group of compute tiles comprises a portion of the plurality of compute tiles defined based on the plurality of tile IDs, the portion comprising one half, one quarter, one eighth, or one sixteenth of the plurality of compute tiles.

4. The apparatus of claim 3, wherein the group of compute tiles comprises a first group of compute tiles and the operation to be executed comprises a first operation, wherein the compute tile control circuit is to specify a plurality of additional operations to be executed in parallel by a corresponding plurality of additional groups of compute tiles defined in accordance with the plurality of tile IDs.

5. The apparatus of claim 4, wherein the compute tile control circuit is to maintain a routing table to associate each compute tile with one of the plurality of additional groups or with the first group of compute tiles.

6. The apparatus of claim 5, wherein the plurality of compute tiles comprise a two dimensional grid of compute tiles, each compute tile in the two dimensional grid coupled to the memory or to a subset of other compute tiles over the interconnect network.

7. The apparatus of claim 6, wherein the compute tile control circuit is to route instructions corresponding to the first operation over the interconnect network to the first group of compute tiles in accordance with the routing table.

8. The apparatus of any one of claims 1 to 7, wherein the plurality of instances of the instruction comprise a corresponding plurality of microoperations, the compute tile control circuit further comprising:
instruction fetch circuitry to fetch an instruction; and
decode circuitry to decode the macroinstruction to generate the corresponding plurality of microoperations.

9. The apparatus of any one of claims 2 to 9, wherein the memory comprises a scratchpad memory or cache coupled to the plurality of compute tiles.

10. A method, comprising:
dispatching, by a compute tile control circuit, an instruction for execution by a plurality of compute tiles coupled to an interconnect network;
executing, by the plurality of compute tiles, a corresponding plurality of instances of the instruction to associate the plurality of compute tiles with a corresponding plurality of tile identifiers (IDs), each compute tile to be associated with one of the tile IDs; and
scheduling, by the compute tile control circuit, an operation to be executed collectively by a group of the compute tiles, the group of compute tiles to be indicated, at least in part, based on the plurality of tile IDs.

11. The method of claim 10, wherein each compute tile includes a control register in which to load a corresponding tile ID of the plurality of tile IDs from a memory responsive to execution of a corresponding instance of the instruction.

12. The method of claims 10 or 11, wherein the group of compute tiles comprises a portion of the plurality of compute tiles defined based on the plurality of tile IDs, the portion comprising one half, one quarter, one eighth, or one sixteenth of the plurality of compute tiles.

13. The method of claim 12, wherein the group of compute tiles comprises a first group of compute tiles and the operation to be executed comprises a first operation, wherein the compute tile control circuit is to specify a plurality of additional operations to be executed in parallel by a corresponding plurality of additional groups of compute tiles defined in accordance with respective tile IDs.

14. The method of claim 13, further comprising:
maintaining, by the compute tile control circuit, a routing table to associate each compute tile with one of the plurality of additional groups or with the first group of compute tiles.

15. The method of claim 14, wherein the plurality of compute tiles comprise a two dimensional grid of compute tiles, each compute tile in the two dimensional grid coupled to the memory and/or to a subset of other compute tiles over the interconnect network.
